# EUROPEAN PATENT APPLICATION

(11) **EP 4 546 145 A1**
(43) Date of publication of application: **30.04.2025**
(21) Application number: 24206745.2
(22) Date of filing: 15.10.2024
(51) Int. Cl.: G06F 12/02, G06F 12/06, G06F 12/1072, G06F 12/0831

(54) **STORAGE DEVICE, OPERATION METHOD OF STORAGE DEVICE, AND OPERATION METHOD OF STORAGE SYSTEM INCLUDING THE SAME**

(30) Priority: 25.10.2023 KR 20230144026; 05.01.2024 KR 20240002179; 03.07.2024 US 202418762697
(71) Applicant: Samsung Electronics Co., Ltd, Suwon-si, Gyeonggi-do 16677 (KR)
(72) Inventor: SONG, Hyunsub, 16677 Suwon-si (KR); SONG, Hyeonho, 16677 Suwon-si (KR); LEE, Donghun, 16677 Suwon-si (KR); JEONG, Wonseb, 16677 Suwon-si (KR)
(74) Representative: Marks & Clerk LLP

(57) **Abstract**

Disclosed is an operation method of a storage device which is connected to a compute express link (CXL) switch. The method includes receiving a first access request from a first host through the CXL switch, performing an operation corresponding to the first access request, detecting a change in first metadata managed by the first host, based on the first access request, and transmitting first update information corresponding to the change in the first metadata to a second host sharing the storage device through the CXL switch.

## Description

### BACKGROUND

Embodiments of the present invention described herein relate to a semiconductor memory, and more particularly, relate to a storage device, an operation method of the storage device, and an operation method of a storage system including the same.

Semiconductor memory can be classified as volatile memory, which loses data when power is turned off, such as a static random access memory (SRAM) and a dynamic random access memory (DRAM). Alternatively, nonvolatile memory retains data stored therein even when power is turned off, such as a flash memory, a phase-change RAM (PRAM), a magnetic RAM (MRAM), a resistive RAM (RRAM), and a ferroelectric RAM (FRAM). A flash memory is being widely used as a high-capacity storage medium. Nowadays, a plurality of storage devices and a plurality of hosts are connected in a data center, the plurality of hosts are capable of sharing the plurality of storage devices, and the plurality of hosts manage the plurality of storage devices independently of each other. However, this can lead to inconsistencies in metadata which are managed by different hosts. To cope with this situation, the plurality of hosts maintain the coherence of metadata between the plurality of hosts through individual communications, but the individual communications (i.e., inter-host communication) between the plurality of hosts may cause overhead, ultimately diminishing the performance of the whole storage system.

### SUMMARY

Embodiments of the present invention provide a storage device with improved reliability and improved performance, an operation method of the storage device, and an operation method of a storage system including the same.

According to an embodiment, an operation method of a storage device which is connected to a compute express link (CXL) switch includes receiving a first access request from a first host through the CXL switch, performing an operation corresponding to the first access request, detecting a change in first metadata managed by the first host, based on the first access request, and transmitting first update information corresponding to the change in the first metadata to a second host sharing the storage device through the CXL switch.

According to an embodiment, a storage device includes a nonvolatile memory device, a random access memory (DRAM) device, and a controller that controls the nonvolatile memory device and the DRAM device in response to a first access request received from a first host among a plurality of hosts. The controller includes a compute express link (CXL) interface circuit that is connected to a CXL switch and receives the first access request from the first host through the CXL switch, a NAND interface circuit that controls the nonvolatile memory device, based on the first access request, a DRAM controller that controls the DRAM device, based on the first access request, and a coherence circuit that detects a change in first metadata managed by the first host in response to the first access request and transmits first update information corresponding to the change in the first metadata to other hosts sharing the storage device from among the plurality of hosts through the CXL switch.

According to an embodiment, an operation method of a storage system which includes a compute express link (CXL) switch, a first storage device connected to the CXL switch, a first host connected to the CXL switch, and a second host connected to the CXL switch includes transmitting, by the first host, a first access request corresponding to a storage area of the first storage device to the first storage device through the CXL switch and updating first metadata, receiving, by the first storage device, the first access request through the CXL switch and performing an operation corresponding to the first access request, detecting, by the first storage device, a change in the first metadata and transmitting first update information corresponding to the change in the first metadata to the second host through the CXL switch, and receiving, by the second host, the first update information through the CXL switch and updating second metadata based on the first update information. The first and second hosts share the first storage device, the first host manages a first storage area of the first storage device based on the first metadata, and the second host manages the first storage area of the first storage device, based on the second metadata.

According to an embodiment, a coherence device includes a form factor configured to be attached to a CXL switch of a storage system and an interface circuit configured to communicate with the CXL switch through the interface circuit, and a coherence circuit. The coherence circuit is configured to detect a change in first metadata in response to a first memory access request from a first host through the CXL switch, and to transmit first update information corresponding to the change in the first metadata to a second host, the first and second host sharing a plurality of storage devices through the CXL switch.

At least some of the above and other features of the invention are set out in the claims.

### BRIEF DESCRIPTION OF THE FIGURES

The above and other objects and features of the present invention will become apparent by describing in detail embodiments thereof with reference to the accompanying drawings.
FIG. 1 is a block diagram illustrating a storage system.
FIG. 2 is a block diagram illustrating a storage system according to an embodiment of the present invention.
FIGS. 3A and 3B are diagrams for describing an operation of a storage system of FIG. 2.
FIG. 4 is a diagram for describing storage areas identified by a plurality of hosts of FIG. 2.
FIG. 5 is a flowchart illustrating an operation of a first storage device of FIG. 2.
FIG. 6 is a diagram illustrating a share table used by a multicasting circuit of a first storage device of FIG. 2.
FIGS. 7A and 7B are diagrams for describing an operation of a storage system of FIG. 2.
FIG. 8 is a diagram for describing how metadata of a second host of FIG. 2 is updated.
FIG. 9 is a flowchart illustrating an operation of a storage system described with reference to FIGS. 7A and 7B.
FIGS. 10A to 10C are diagrams for describing an operation of a storage system of FIG. 2.
FIG. 11 is a flowchart illustrating an operation of a storage system described with reference to FIGS. 10A to 10C.
FIG. 12 is a diagram illustrating a share table included in a first storage device of FIG. 2.
FIG. 13 is a diagram for describing an operation of a storage system of FIG. 2.
FIG. 14 is a flowchart illustrating an operation of a storage system according to an embodiment of FIG. 13.
FIGS. 15A to 15D are diagrams for describing an operation of a storage system of FIG. 2.
FIG. 16 is a flowchart illustrating an operation of a storage system of FIGS. 15A to 15D.
FIG. 17 is a block diagram illustrating a storage system according to an embodiment of the present invention.
FIG. 18 is a flowchart illustrating an operation of a storage system of FIG. 17.
FIG. 19 is a flowchart illustrating an operation of a storage system of FIG. 17.
FIG. 20 is a block diagram illustrating a topology of a storage system according to an embodiment of the present invention.
FIG. 21 is a block diagram illustrating a data center to which a storage system according to an embodiment of the present invention is applied.

### DETAILED DESCRIPTION

Below, embodiments of the present invention will be described in detail and clearly to such an extent that an ordinary one in the art easily carries out the present invention.

Ordinal numbers such as "first," "second," "third," etc. may be used simply as labels of certain elements, steps, etc., to distinguish such elements, steps, etc. from one another. Terms that are not described using "first," "second," etc., in the specification, may still be referred to as "first" or "second" in a claim. In addition, a term that is referenced with a particular ordinal number (e.g., "first" in a particular claim) may be described elsewhere with a different ordinal number (e.g., "second" in the specification or another claim).

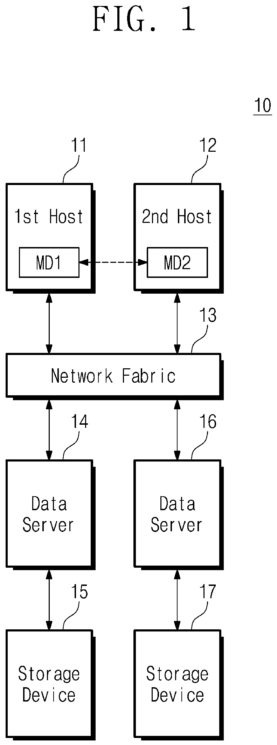

FIG. 1 is a block diagram illustrating a storage system. Referring to FIG. 1, a storage system 10 may include hosts 11 and 12, a network 13, data servers 14 and 16, and a plurality of storage devices 15 and 17. The hosts 11 and 12 and the data servers 14 and 16 may be connected to the network 13. The data servers 14 and 16 may be respectively connected to the storage devices 15 and 17. The data servers 14 and 16 may respectively control the storage devices 15 and 17.

In an embodiment, the storage system 10 may be a disaggregated storage system. The disaggregated storage system (or architecture) may be a kind of data storage of a computer data center. In the disaggregated storage system, storage resources are pooled separately from computing resources in a centralized storage system (i.e., a computer server) without modifying internal physical connections. For example, in the disaggregated storage system, computing resources (e.g., hosts) and storage resources (e.g., storage devices) may be connected to each other over a network, and one or more of the computing resources and the storage resources may be substituted or exchanged with new or different resources, or added to increase the overall capacity, or removed.

In an embodiment, each of the hosts 11 and 12 may access the storage devices 15 and 17 through the network 13 and the data servers 14 and 16. For example, the first host 11 may access the first storage device 15 through the network 13 (e.g. the network fabric 13) and the first data server 14 and may access the second storage device 17 through the network 13 and the second data server 16. Likewise, the second host 12 may access the first storage device 15 through the network 13 and the first data server 14 and may access the second storage device 17 through the network 13 and the second data server 16.

The hosts 11 and 12 may share storage spaces of the storage devices 15 and 17 with each other. For example, each of the hosts 11 and 12 may individually access the storage spaces of the storage devices 15 and 17. In this case, the first host 11 may identify or manage the storage spaces of the storage devices 15 and 17 based on first metadata MD1, and the second host 12 may identify or manage the storage spaces of the storage devices 15 and 17 based on second metadata MD2.

In this case, because the storage devices 15 and 17 are individually accessed by the hosts 11 and 12, the first metadata MD1 and the second metadata MD2 which are respectively managed by the first host 11 and the second host 12 may be different from each other. However, because the first and second metadata MD1 and MD2 are information about the same storage space (i.e., information about the storage devices 15 and 17), the coherence between the first and second metadata MD1 and MD2 is preferably be maintained. Accordingly, the hosts 11 and 12 may perform communication for maintaining the coherence of the first and second metadata MD1 and MD2 through a separate interface or the network 13. The communication operation for the coherence of metadata may be an overhead when the storage system 10 or the hosts 11 and 12 operate.

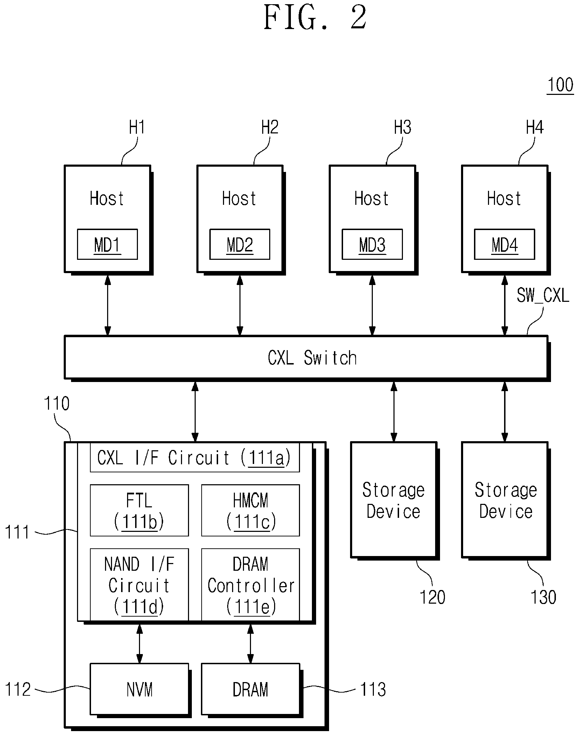

FIG. 2 is a block diagram illustrating a storage system according to an embodiment of the present invention. For brevity of drawing and for convenience of description, a storage system 100 is depicted as including four hosts H1 to H4 and three storage devices 110 to 130 as illustrated in FIG. 2, but the number of hosts or storage devices of the present invention is not limited thereto. For example, the plurality of hosts H1 to H4 and the plurality of storage devices 110 to 130 may be individually replaced by other hosts or storage devices. Additional storage devices or additional hosts may be connected to a CXL (Compute eXpress Link) switch SW_CXL, without changing the existing hardware configuration, so that the entire capacity of the storage system 100 may be increased, or an additional function may be provided.

Referring to FIG. 2, the storage system 100 may include the plurality of hosts H1 to H4, the CXL switch SW_CXL, and the plurality of storage devices 110 to 130. In an embodiment, the storage system 100 may be a disaggregated storage system. For example, the plurality of hosts H1 to H4 and the plurality of storage devices 110 to 130 may be connected to the CXL switch SW_CXL. Each of the plurality of hosts H1 to H4 may access the respective storage devices 110 to 130 through the CXL switch SW_CXL.

In an embodiment, the plurality of hosts H1 to H4 may access or manage the plurality of storage devices 110 to 130, based on a plurality of metadata MD1 to MD4. For example, the first host H1 may access at least some of the plurality of storage devices 110 to 130, based on the first metadata MD1. The second host H2 may access at least some of the plurality of storage devices 110 to 130, based on the second metadata MD2. The third host H3 may access at least some of the plurality of storage devices 110 to 130, based on the third metadata MD3. The fourth host H4 may access at least some of the plurality of storage devices 110 to 130, based on the fourth metadata MD4.

In an embodiment, the metadata may include information about a storage area or memory area which is managed by a host. For example, the first metadata MD1 may include information about a memory physical address that indicates a memory area, such as a system memory area, to which the first host H1 accesses. In this case, the memory physical address may be different from a physical address which is managed by a flash translation layer (FTL) of each of the storage devices. For example, the memory physical address included in the first metadata MD1 of the first host H1 may be information indicating a region of a system memory (e.g., a plurality of the storage devices) of the first host H1. In contrast, the physical address which is managed by the FTL of the storage device may be information indicating a storage area of a nonvolatile memory device.

Alternatively, the first metadata MD1 may include a logical address indicating a storage space to be accessed by the first host H1. For example, a file system of the first host H1 may be configured to organize files or data which are used by the first host H1. The file system may manage storage areas of at least some of the storage devices 110 to 130 by using logical addresses. The file system may assign and manage a logical address to data to be stored in the storage devices 110 to 130. As described above, the plurality of metadata MD1 to MD4 each may be managed by the corresponding hosts H1 to H4, respectively. Each of metadata MD1 to MD4 may include information on a logical address managed by the file system or information about a memory physical address indicating a system memory area, depending on a way implemented by each of the plurality of hosts H1 to H4.

In the above disaggregated storage system, a specific storage device (e.g., the first storage device 110) may be shared by at least two of the plurality of hosts H1 to H4. In this case, as described above, there may be a need to maintain the coherence of the metadata MD1 to MD4 which are managed by the hosts H1 to H4.

According to an embodiment of the present disclosure, each of the plurality of storage devices 110 to 130 may detect a change in the metadata MD1 to MD4 managed by the hosts H1 to H4. Each of the plurality of storage devices 110 to 130 may transmit, broadcast, or multicast the changed information of the metadata MD1 to MD4 to the plurality of hosts H1 to H4. The plurality of hosts H1 to H4 may update the metadata MD1 to MD4 based on the received information such that the coherence of the metadata MD1 to MD4 is maintained. The way to maintain or manage the coherence of metadata, according to an embodiment of the present disclosure, will be described in detail later.

The first storage device 110 may include a controller 111, a nonvolatile memory device 112, and a dynamic random access memory (DRAM) device 113. In an embodiment, the first storage device 110 may be a storage device, which is configured to comply with the CXL standard, such as a CXL storage, a CXL memory module-hybrid (CMM-H), or a memory-semantic solid state drive (MS-SSD). However, the present invention is not limited thereto.

The controller 111 may control the nonvolatile memory device 112 or the DRAM device 113 in response to requests received from the plurality of hosts H1 to H4 through the CXL switch SW_CXL. The controller 111 may include a CXL interface circuit 111a, a flash translation layer (FTL) 111b, a hardware-level metadata coherency multicaster (HMCM) 111c (for convenience of description, hereinafter referred to as a "coherence circuit (also referred to as a "metadata coherence circuit"), a NAND interface circuit 111d, and a DRAM controller 111e. The components included in the controller 111 of FIG. 2 are provided as an example, and the present invention is not limited thereto. For example, the controller 111 may further include various components such as a processor configured to control all operations of the controller 111, a buffer memory, an ECC engine, and an encryption engine.

The CXL interface circuit 111a may be connected to the CXL switch SW_CXL. The CXL interface circuit 111a may receive access requests issued from the plurality of hosts H1 to H4 through the CXL switch SW_CXL. In an embodiment, the access request may have the format complying with the CXL standard such as CXL.io and CXL.mem.

The FTL 111b may perform various operations, which allow the nonvolatile memory device 112 to be efficiently used, such as an address mapping operation, a wear-leveling operation, and a garbage collection operation. The address mapping operation refers to an operation of translating into or mapping a logical address to a memory physical address. In this case, the logical address refers to an address or information which is managed by the plurality of hosts H1 to H4, and the memory physical address refers to information indicating an actual physical location of the nonvolatile memory device 112, at which data are stored. The wear-leveling operation refers to an operation of allocating a plurality of memory blocks included in the nonvolatile memory device 112 so as to be uniformly used or balancing erase counts of the plurality of memory blocks. Through the wear-leveling operation, a specific memory block may be prevented from being excessively deteriorated. The garbage collection operation refers to an operation of securing an available capacity of the nonvolatile memory device 112 by copying valid data of a first memory block to a second memory block and then erasing the first memory block.

In an embodiment, the FTL 111b may be implemented through software or firmware. Information or a program code associated with the FTL 111b may be stored in the buffer memory (not illustrated) of the controller 111 and may be driven by the processor (not illustrated) of the controller 111. In an embodiment, at least some or all of the functions of the FTL 111b may be implemented in the form of hardware, and at least some or all of the functions of the FTL 111b may be performed without the intervention of the processor.

The first coherence circuit 111c may include a coherence circuit. The coherence circuit may detect whether the metadata MD1 to MD4 managed by the plurality of hosts H1 to H4 are changed, based on (i.e., in response to) access requests received from the plurality of hosts H1 to H4. For example, when a request for writing data in the first storage device 110 or changing data of the first storage device 110 is received from the first host H1, the first metadata MD1 managed by the first host H1 may be changed. The first coherence circuit 111c (i.e., coherence circuit) may detect the change in the metadata caused by the data write or change operation on the first storage device 110. The first coherence circuit 111c may transmit information about the change in the metadata to any other hosts. In this case, the other hosts may be hosts sharing the first storage device 110. In an embodiment, each of the other hosts may update its own metadata based on the change information. The operation of the first coherence circuit 111c will be described in detail later.

Under control of the controller 111, the nonvolatile memory device 112 may store data or may output the stored data. In an embodiment, the nonvolatile memory device 112 may include a NAND flash memory (or referred to as NAND flash device). However, the present invention is not limited thereto.

The NAND interface circuit 111d may control the nonvolatile memory device 112 such that data are stored in the nonvolatile memory device 112 or data are read from the nonvolatile memory device 112. In an embodiment, the NAND interface circuit 111d may include at least one of various flash memory interfaces such as a toggle NAND interface and an open NAND flash interface (ONFI). For example, the nonvolatile memory device 112 may include a plurality of NAND flash devices. In the case where the NAND interface circuit 111d is implemented based on the toggle interface, the NAND interface circuit 111d communicates with the plurality of NAND flash devices through a plurality of channels. The plurality of NAND flash devices may be connected to the plurality of channels in form of a multi-channel (or multi-way) structure.

The NAND interface circuit 111d may transmit a chip enable signal /CE, a command latch enable signal CLE, an address latch enable signal ALE, a read enable signal /RE, and a write enable signal /WE to the plurality of NAND flash devices through the plurality of channels. The NAND interface circuit 111d and each of the plurality of NAND flash devices may exchange a data signal DQ and a data strobe signal DQS through corresponding channels.

**[Table 1]**

| SIGNALS | | | | | | | MODE |
|---|---|---|---|---|---|---|---|
| /CE | CLE | ALE | /WE | /RE | DQS | DQx | |
| L | H | L | ↑ | H | X | CMD | Command Input |
| L | L | H | ↑ | H | X | ADDR | Address Input |
| L | L | L | H | H | ↑↓ | DATA in | Data Input |
| L | L | L | H | ↑↓ | ↑↓ | DATA out | Data Output |

Table 1 shows operation modes of a NAND flash device, which are determined depending on signal states. Referring to Table 1, while the NAND flash device receives a command CMD or an address ADDR or receives/outputs (i.e., receives or outputs) data "DATA", the chip enable signal ICE maintains the low state "L". During a "Command Input" mode, the NAND interface circuit 11 1d may control signal lines such that the command latch enable signal CLE has the high level "H", the address latch enable signal ALE has the low level "L", the write enable signal /WE toggles between the high level "H" and the low level "L" and the read enable signal /RE has the high level "H". During the "Command Input" mode, the NAND interface circuit 111d may transmit the command CMD to the NAND flash device through data signals DQx in synchronization with the rising edge ↑ of the write enable signal /WE. The NAND flash device may identify the command CMD from the data signals DQx in response to the rising edge ↑ of the write enable signal /WE. During an "Address Input" mode, the NAND interface circuit 111d may control signal lines such that the command latch enable signal CLE has the low level "L", the address latch enable signal ALE has the high level "H", the write enable signal /WE toggles between the high level "H" and the low level "L", and the read enable signal /RE has the high level "H". During the "Address Input" mode, the NAND interface circuit 111d may send the address ADDR to the NAND flash device through the data signals DQx in synchronization with the rising edge ↑ of the write enable signal /WE. The NAND flash device may identify the address ADDR from the data signals DQx in response to the rising edge ↑ of the write enable signal /WE. In an embodiment, the address ADDR may be a value corresponding to a physical block address of the NAND flash device.

During a "Data Input" mode, the NAND interface circuit 111d may control signal lines such that the command latch enable signal CLE has the low level "L", the address latch enable signal ALE has the low level "L", the write enable signal /WE has the high level "H", the read enable signal /RE has the high level "H", and the data strobe signal DQS toggles between the high level "H" and the low level "L". During the "Data Input" mode, the NAND interface circuit 111d may send the data "DATA" to the NAND flash device through the data signals DQx in synchronization with the rising edge ↑ and the falling edge ↓ of the data strobe signal DQS. The NAND flash device may identify the data "DATA" from the data signals DQx in response to the rising edge ↑ and the falling edge ↓ of the data strobe signal DQS.

During a "Data Output" mode, the NAND interface circuit 111d may control signal lines that the clock latch enable signal CLE has the low level "L", the address latch enable signal ALE has the low level "L", the write enable signal /WE has the high level "H", and the read enable signal /RE toggles between the high level "H" and the low level "L". During the "Data Output" mode, the NAND flash device may generate the data strobe signal DQS toggling between the high level "H" and the low level "L" in response to the read enable signal /RE. The NAND flash device may transmit the data "DATA" to the NAND interface circuit 111d through the data signals DQx in synchronization with the rising edge ↑ and the falling edge ↓ of the data strobe signal DQS. The NAND interface circuit 111d may identify the data "DATA" from the data signals DQx in response to the rising edge ↑ and the falling edge ↓ of the data strobe signal DQS.

The toggle interface described above is an example, and the present invention is not limited thereto.

The DRAM controller 111e may be configured to store data in the DRAM device 113 or to read data from the DRAM device 113. In an embodiment, the DRAM controller 111e may be implemented to comply with the standard protocol such as a DDR interface or an LPDDR interface.

The DRAM device 113 may operate under control of the controller 111. In an embodiment, the DRAM device 113 may be configured to store a variety of information, which is necessary for the first storage device 110 to operate, such as map data to be used by the FTL 111b and information necessary for an operation of the controller 111. Alternatively, the DRAM device 113 may be a buffer memory configured to temporarily store the write data (i.e., data to stored) received from the plurality of hosts H1 to H4 or the read data (i.e., data to read) read from the nonvolatile memory device 112. Alternatively, the DRAM device 113 may be used or recognized as a system memory of the plurality of hosts H1 to H4.

In an embodiment, the first storage device 110 may be installed or detached in a CXL interface-based physical port (e.g., a PCIe physical port). For example, the first storage device 110 may have a connector (to allow the storage device 110 to be removably attached to and detached from a CXL switch (or CXL interface-based physical port) of a storage system. The connector may be mated with a corresponding connector of the CXL switch (e.g., mechanically plugged together to contact corresponding contacts of the connectors to establish electrical signal and power connections therebetween). For example, in an embodiment, the first storage device 110 may be implemented based on the E1.S, E1.L, E3.S, E3.L, or PCIe AIC (CEM) form factor. Alternatively, the first storage device 110 may be implemented based on the U.2 form factor, the M.2 form factor, various different types of PCIe-based form factors, or various different types of small form factors. In an embodiment, the first storage device 110 may be implemented with various types of form factors and may provide a hot-plug function which allows the first storage device 110 to be installed in (or added to) or removed from the physical port or the CXL switch SW_CXL.

In an embodiment, structures of the remaining storage devices 120 and 130 are similar to the structure of the first storage device 110, and thus, repeated description of identical, similar or functionally equivalent elements (or operations) may not be given to avoid redundancy.

As described above in the example of the first coherence circuit 111c and the first storage device 110, according to an embodiment of the present invention, each of the plurality of storage devices 110 to 130 may include a coherence circuit 1 1 1c. The coherence circuit 111c of each of the plurality of storage devices 110 to 130 may include coherence circuit. The coherence circuit (i.e., coherence circuit) may detect the change in the metadata MD1 to MD4 of the plurality of hosts H1 to H4. The coherence circuit of each of the plurality of storage devices 110 to 130 may transmit the change information of the metadata to at least some of the plurality of hosts H1 to H4, and the at least some of the plurality of hosts H1 to H4 may update their own metadata based on the change information. Accordingly, the coherence of the metadata MD1 to MD4 may be maintained without individual communication between the plurality of hosts H1 to H4.

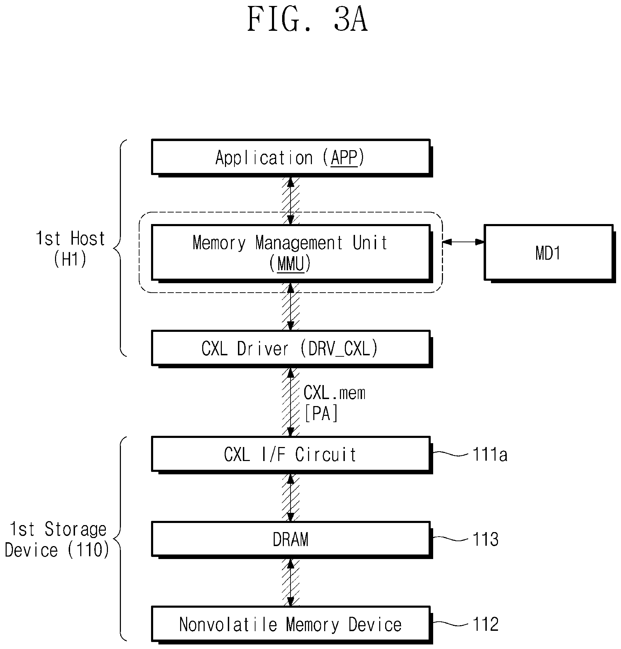

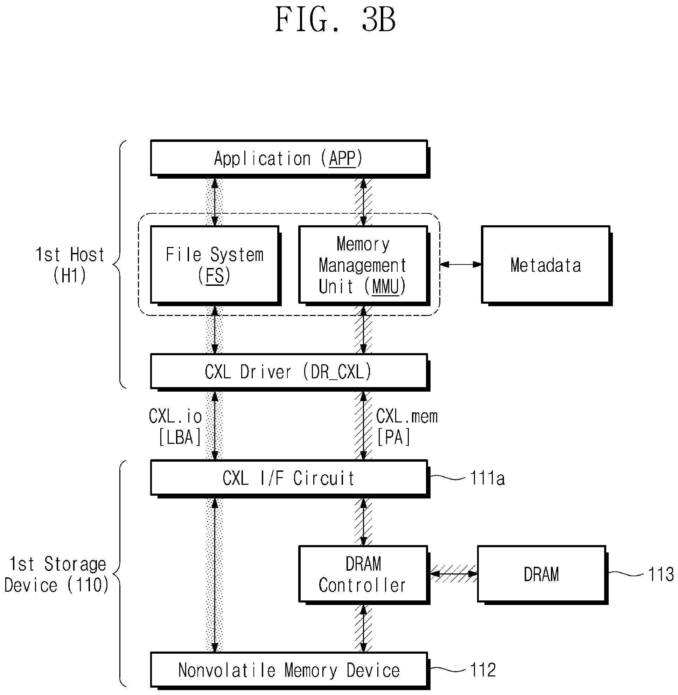

FIGS. 3A and 3B are diagrams for describing an operation of a storage system of FIG. 2. For convenience of description, an access method of the storage system 100 will be described based on a hierarchical (or layer) structure of the first host H1 and the first storage device 110, and some components are omitted. However, the present invention is not limited thereto. For example, the plurality of hosts H1 to H4 and each of the plurality of storage devices 110 to 130 may communicate with each other through the CXL switch SW_CXL by a method to be described with reference to FIGS. 3A and 3B.

First, referring to FIGS. 2 and 3A, the hierarchical structure of the first host H1 may include an application APP, a memory management unit MMU, and a CXL driver DRV_CXL. The application APP may include various application programs which are driven by the first host H1.

The memory management unit MMU may be configured to manage the access of the application APP to the system memory based on the first metadata MD1. For example, the memory management unit MMU may be configured to translate a logical address of data to be used by the application APP into a memory physical address PA of the system memory, based on the first metadata MD1. The memory management unit MMU may issue an access request, based on the memory physical address PA of the system memory.

The CXL driver DRV_CXL may receive the access request from the memory management unit MMU and may convert the received access request to be suitable for the CXL standard. For example, based on the CXL.mem protocol as a memory access protocol, the CXL driver DRV_CXL may transmit the access request including the memory physical address PA to the first storage device 110. In an embodiment, in the CXL standard, the CXL.mem protocol may be a memory access protocol to be used for the memory access.

The first storage device 110 may operate in response to the access request received from the first host H1. For example, the CXL interface circuit 111a of the first storage device 110 may receive a memory access request (e.g., CXL.mem) including a memory physical address PA from the first host H1. In an embodiment, the memory access request CXL.mem may be transferred from the first host H1 to the CXL interface circuit 111a of the first storage device 110 through the CXL switch SW_CXL. In response to the memory access request CXL.mem received through the CXL interface circuit 111a, the first storage device 110 may access the DRAM device 113 to determine whether data or a memory area corresponding to the memory physical address PA is present in the DRAM device 113. In an embodiment, when the data or memory area corresponding to the memory physical address PA is absent from the DRAM device 113, the first storage device 110 may load the data stored in the nonvolatile memory device 112 to the DRAM device 113, or may flush data stored in the DRAM device 113 to the nonvolatile memory device 112 such that a memory area of the DRAM device 113 is secured.

As described above, the memory management unit MMU of the first host H1 may manage the system memory area based on the first metadata MD1. In this case, the first host H1 may recognize the storage area of the first storage device 110 as the system memory area, and the memory management unit MMU may manage the storage area of the first storage device 110 as the system memory area. Accordingly, the first host H1 may use the storage area of the first storage device 110 as the system memory area and may perform the access to the first storage device 110 based on the memory access request CXL.mem.

Referring to FIGS. 2 and 3B, the hierarchical structure of the first host H1 may include the application APP, a file system FS, the memory management unit MMU, and the CXL driver DR V _CXL. The application APP, the memory management unit MMU, and the CXL driver DRV_CXL are described above, and thus, repeated description of identical, similar or functionally equivalent elements (or operations) may not be given to avoid redundancy.

The file system FS may be configured to organize files or data which are used by the application APP. For example, the file system FS may manage the storage area of the first storage device 110 by using a logical block address LBA. The file system FS may assign and manage the logical block address LBA to data to be stored in the first storage device 110. In an embodiment, the type of the file system FS may change depending on an operating system of the first host H1. In an embodiment, the file system FS may include at least one of various types of file systems such as a file allocation table (FAT), an FAT32, an NT file system (NTFS), a hierarchical file system (HFS), a journaled file system (JSF2), an XFS, an on-disk structure-5 (ODS-5), an UDF, a ZFS, a Unix file system (UFS), an ext2, an ext3, an ext4, a ReiserFS, a Reiser4, an ISO 9660, a Gnome VFS, a BFS, and WinFS, or may include at least one of various types of distributed file systems such as a Google file system (GFS), a Hadoop distributed file system (HDFS), an Andrew file system (AFS), and a Gluster file system.

In the embodiment of FIG. 3B, the first host H1 may access the first storage device 110 based on the method described with reference to FIG. 3A. For example, through the memory management unit MMU and the CXL driver DRV_CXL, the first host H1 may issue the memory access request CXL.mem including the memory physical address PA corresponding to the system memory and may access the first storage device 110.

Alternatively, the first host H1 may access the first storage device 110 through the file system FS and the CXL driver DRV_CXL. For example, the application APP of the first host H1 may identify the logical block address LBA of data or a storage space to be accessed, through the file system FS. The CXL driver DRV_CXL may receive the logical block address LBA corresponding to the data or storage area to be accessed from the file system FS and may issue an input/output (i.e., input or output) request CXL.io which is the input/output request protocol and includes the logical block address LBA. In an embodiment, the input/output request CXL.io may be a PCI-e-based non-coherent input/output protocol in the CXL standard.

The first storage device 110 may operate in response to the memory access request CXL.mem or the input/output request CXL.io from the first host H1. For example, the CXL interface circuit 111a of the first storage device 110 may receive the input/output request CXL.io from the first host H1. The first storage device 110 may access data or a storage area corresponding to the logical block address LBA in response to the input/output request CXL.io. In this case, the first storage device 110 may perform the access to the nonvolatile memory device 112 through the FTL 111b in response to the input/output request CXL.io.

The CXL interface circuit 111a of the first storage device 110 may receive the memory access request CXL.mem from the first host H1. The first storage device 110 may perform the access to the DRAM device 113 in response to the memory access request CXL.mem. In this case, the controller 111 of the first storage device 110 may operate as a cache controller. When the data or storage area corresponding to the memory physical address PA is absent from the DRAM device 113, the controller 111 (or the cache controller) may perform the access to the nonvolatile memory device 112.

In the access operation described with reference to FIGS. 3A and 3B, the file system FS and the memory management unit MMU may perform the above management operation by using metadata. For example, when the first host H1 recognizes or manages the first storage device 110 as a system memory, the memory management unit MMU of the first host H1 may perform the above operation by using metadata in which information on the memory physical address PA is included. When the first host H1 recognizes the first storage device 110 as a storage medium, the file system FS of the first host H1 may perform the above operation by using metadata in which information on the logical block address LBA is included.

That is, the first host H1 may recognize or manage the first storage device 110 as a system memory or a storage medium depending on a way to implement. In this case, metadata may include information about the logical block address LBA or the memory physical address PA.

As described above, the first host H1 may perform the access to the first storage device 110 based on the input/output request CXL.io or the memory access request CXL.mem. For example, when the first host H1 recognizes or manages the first storage device 110 as a system memory, the first host H1 may access the first storage device 110 through the memory access request CXL.mem. When the first host H1 recognizes the first storage device 110 as a storage medium, the first host H1 may access the first storage device 110 through the input/output request CXL.io.

The embodiments of FIGS. 3A and 3B are described based on the operation between the first host H1 and the first storage device 110, but the present invention is not limited thereto. For example, each of the plurality of hosts H1 to H4 may communicate with one or more of the plurality of storage devices 110 to 130 based on the access method described with reference to FIGS. 3A and 3B.

Below, the term "access request" is used to describe embodiments of the present invention easily. The access request may be a request which a host issues to access a storage device. In this case, unless otherwise defined, the access request may be the input/output request CXL.io or the memory access request CXL.mem described with reference to FIGS. 3A and 3B. When the access request is the input/output request CXL.io, the access request may include the logical block address LBA, and metadata of a relevant host may include information about the logical block address LBA. When the access request is the memory access request CXL.mem, the access request may include information about the memory physical address PA indicating a system memory area, and metadata of a relevant host may include information about the memory physical address PA. The metadata may be included (i.e., stored) in a memory space of the corresponding host. Alternatively, the metadata may be included in a memory space of the storage devices.

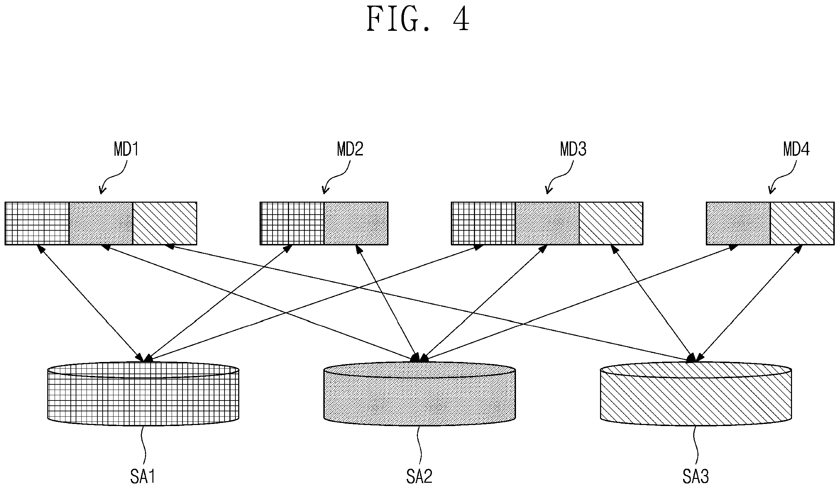

FIG. 4 is a diagram for describing storage areas identified by a plurality of hosts of FIG. 2. Referring to FIGS. 2 and 4, each of the plurality of hosts H1 to H4 may access the plurality of storage devices 110 to 130. For example, the plurality of hosts H1 to H4 may manage storage areas SA1 to SA3 of the plurality of storage devices 110 to 130 by using the first to fourth metadata MD1 to MD4.

In an embodiment, each of the plurality of hosts H1 to H4 may share some of the storage areas SA1 to SA3 of the plurality of storage devices 110 to 130. For example, the first storage device 110 may include the first storage area SA1, the second storage device 120 may include the second storage area SA2, and the third storage device 130 may include the third storage area SA3. In this case, the first host H1 may access the storage areas SA1, SA2, and SA3 of the first, second, and third storage devices 110, 120, and 130. The second host H2 may access the storage areas SA1 and SA2 of the first and second storage devices 110 and 120. The third host H3 may access the storage areas SA1, SA2, and SA3 of the first, second, and third storage devices 110, 120, and 130. The fourth host H4 may access the storage areas SA2 and SA3 of the second and third storage devices 120 and 130.

In this case, the first metadata MD1 of the first host H1 may include information for managing the first, second, and third storage areas SA1, SA2, and SA3. The second metadata MD2 of the second host H2 may include information for managing the first and second storage areas SA1 and SA2. The third metadata MD3 of the third host H3 may include information for managing the first, second, and third storage areas SA1, SA2, and SA3, and the fourth metadata MD4 of the fourth host H4 may include information for managing the second and third storage areas SA2 and SA3.

In an embodiment, the information included in each of the first to fourth metadata MD1 to MD4 may include the logical block address LBA or the memory physical address PA of a relevant storage area depending on a way to implement a relevant host (e.g., depending on whether to manage a storage area as a storage medium or a system memory).

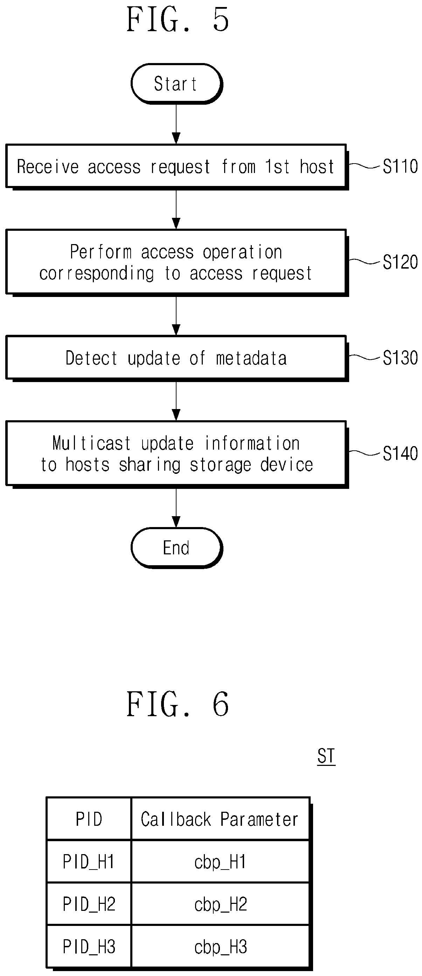

FIG. 5 is a flowchart illustrating an operation of a first storage device of FIG. 2. Referring to FIGS. 2, 4, and 5, in operation S110, the first storage device 110 may receive the access request from the first host H1. In an embodiment, the access request may be the input/output request CXL.io or the memory access request CXL.mem described with reference to FIGS. 3A and 3B.

In operation S120, the first storage device 110 may perform an access operation corresponding to the received access request. For example, when the received access request is a data read request, the first storage device 110 may perform the read operation on the nonvolatile memory device 112 or the DRAM device 113, based on the logical block address LBA or the memory physical address PA included in the received access request. When the received access request is a data write request, the first storage device 110 may perform the write operation on the nonvolatile memory device 112 or the DRAM device 113, based on the logical block address LBA or the memory physical address PA included in the received access request. In an embodiment, when the received access request is a request for data move or data replication, the first storage device 110 may perform an operation corresponding to the data transfer or data copy.

In operation S130, the first storage device 110 may detect the update of the metadata MD1. For example, when the received access request is the data write request, the update for the first metadata MD1 of the first host H1 may be performed. For example, the first host H1 may update information on the logical block address LBA or the memory physical address PA indicating a storage area where the write data are to be stored in the first storage device 110.

The first coherence circuit 111c of the first storage device 110 may detect whether the first metadata MD1 are updated, based on the access request received from the first host H1. For example, when the access request is the write request, the first coherence circuit 111c of the first storage device 110 may detect the update of the first metadata MD1 (i.e., detect any change of the first metadata MD1).

In operation S140, the first storage device 110 may multicast information on the update (i.e., update information) to other hosts sharing the first storage device 110. For example, as illustrated in FIG. 4, the first, second, and third hosts H1, H2, and H3 may share the first storage area SA1 of the first storage device 110. The first host H1 may access the first storage area SA1 of the first storage device 110 and may update the first metadata MD1 of the first host H1. The first storage device 110 may detect any update of the first metadata MD1 (i.e., whether the first metadata MD1 are changed), based on the access request from the first host H1. The first storage device 110 may multicast or transmit the update information of the first metadata MD1 to the second and third hosts H2 and H3.

In an embodiment, the update information of the first metadata MD1 may include information on, e.g., information about the logical block address LBA or the memory physical address PA. In an embodiment, the second and third hosts H2 and H3 may update the second and third metadata MD2 and MD3 by using the provided update information. Accordingly, the coherence of the first to third metadata MD1 to MD3 of the first to third hosts H1 to H3 sharing the first storage device 110 may be maintained. Alternatively, the coherence of information associated with the first storage area SA1 of the first storage device 110 may be maintained between the first to third metadata MD1 to MD3 of the first to third hosts H1 to H3.

FIG. 6 is a diagram illustrating a share table used by a multicasting circuit of a first storage device of FIG. 2. As described with reference to FIG. 5, the first storage device 110 may be shared by the first, second, and third hosts H1, H2, and H3. In this case, a share table ST of the first storage device 110 may include information about the first, second, and third hosts H1, H2, and H3.

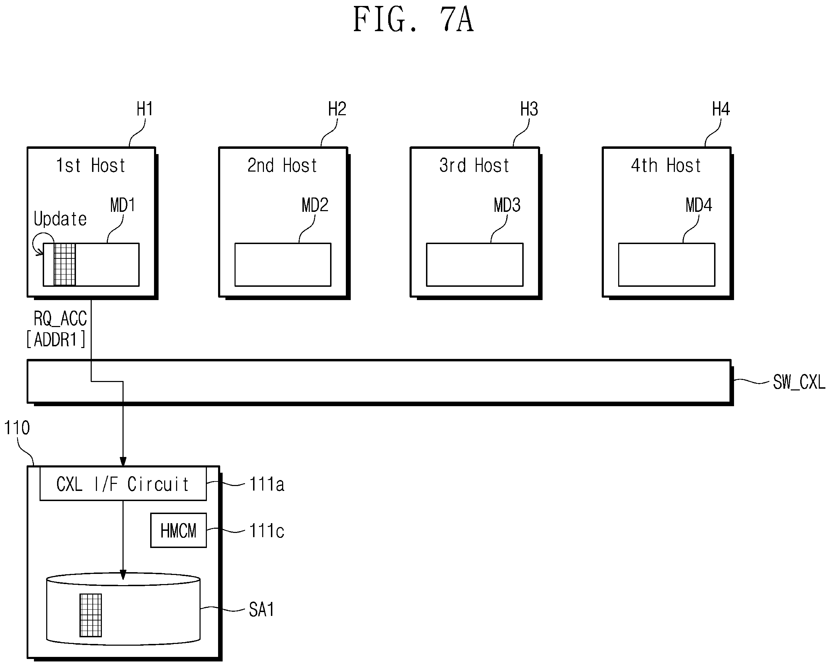

For example, the share table ST of the first storage device 110 may include port identifiers PID_H1, PID_H2, and PID_H3 and callback parameters cbp_H1, cbp_H2, and cbp_H3 of the first, second, and third hosts H1, H2, and H3. Update information INF_u (refer to FIG. 7A) may be transmitted or multicast from the first storage device 110 to the first, second, and third hosts H1, H2, and H3 through (i.e., by using) the port identifiers PID_H1, PID_H2, and PID_H3 and the callback parameters cbp_H1, cbp_H2, and cbp_H3 of the first, second, and third hosts H1, H2, and H3.

In an embodiment, the share table ST may be created or updated in an initialization operation of the first storage device 110. In the initialization operation of the first storage device 110, the share table ST may be created based on the information on which hosts share the first storage device 110. For example, the structure (or architecture) of the storage system 100 may be changed such that a new host is added, an existing host is replaced by a new one, or an existing host is removed. When those kinds of changes occur, the share table ST may be updated.

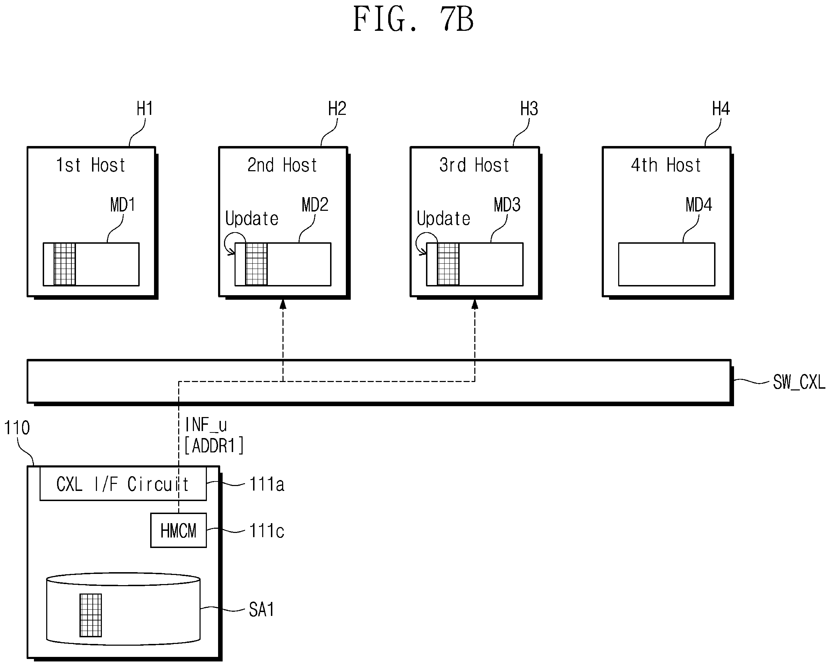

FIGS. 7A and 7B are diagrams for describing an operation of a storage system of FIG. 2. Some components will be omitted for brevity of drawing, but the present invention is not limited thereto.

First, as illustrated in FIG. 7A, the first host H1 may store data in a storage area corresponding to a first address ADDR1. In an embodiment, the first address ADDR1 may indicate an area belonging to the first storage area SA1 of the first storage device 110. The first host H1 may transmit an access request RQ_ACC including the first address ADDR1 to the first storage device 110 through the CXL switch SW_CXL. In an embodiment, the first address ADDR1 may be in form of the logical block address LBA or the memory physical address PA. In an embodiment, the access request RQ_ACC may be the input/output request CXL.io or the memory access request CXL.mem.

The CXL interface circuit 111a of the first storage device 110 may receive the access request RQ_ACC including the first address ADDR1 from the first host H1 through the CXL switch SW_CXL. The first storage device 110 may write the write data in the area corresponding to the first storage device 110 from among the first storage area SA1 in response to the received access request RQ_ACC.

In an embodiment, as the first host H1 writes the write data in the first storage area SA1 of the first storage device 110, the first host H1 may update information corresponding to the first address ADDR1 in the first metadata MD1.

Next, as illustrated in FIG. 7B, the first coherence circuit 111c of the first storage device 110 may detect that the first metadata MD1 of the first host H1 are updated, based on the access request RQ_ACC received from the first host H1. The first coherence circuit 111c may transmit or multicast the update information INF_u to the hosts included in the share table ST. In an embodiment, the update information INF u may include information about the first address ADDR1 updated in the first metadata MD1.

The second and third hosts H2 and H3, which share the first storage device 110 with the first host H1, may receive the update information INF_u through the CXL switch SW_CXL. The second and third hosts H2 and H3 may respectively update the second and third metadata MD2 and MD3, based on the update information INF_u. For example, the update information INF_u may include information about the first address ADDR1 and size information. Alternatively, the second host H2 may update a portion of information of the second metadata MD2based on (i.e., by using) the update information INF_u including the first address ADDR1. The portion of information of the second metadata MD2 may correspond to the first address ADDR1. The third host H3 may update information of the third metadata MD3, which corresponds to the first address ADDR1, based on the update information INF_u.

Accordingly, the second and third hosts H2 and H3 may update the second and third metadata MD2 and MD3 by using the update information INF_u received from the first storage device 110, without individual communication between the first to third hosts H1 to H3. As a result, the coherence of the first to third metadata MD1 to MD3 of the first to third hosts H1 to H3 may be maintained without individual communication between the first to third hosts H1 to H3, thereby diminishing overhead of inter-host communication between the hosts and ultimately enhancing the performance of the whole storage system.

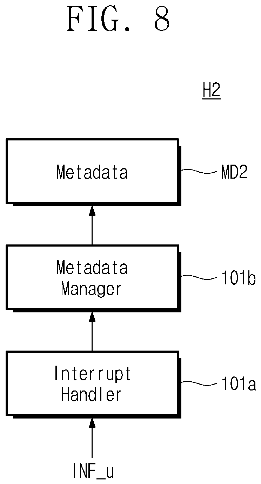

FIG. 8 is a diagram for describing how metadata of a second host of FIG. 2 is updated. As described above, the update information INF_u about the first metadata MD1 of the first host H1 may be transmitted or multicast from the first storage device 110 to the second host H2. In this case, the second host H2 may update the second metadata MD2 based on the update information INF_u.

For example, the second host H2 may include an interrupt handler 101a, a metadata manager 101b, and the second metadata MD2. In an embodiment, the update information INF_u transmitted or multicast from the first storage device 110 may be provided through the CXL switch SW_CXL in an interrupt manner. For example, when the update information INF_u is transmitted from the first storage device 110 to the CXL switch SW_CXL, the CXL switch SW_CXL may transmit an interrupt signal to the second host H2. Alternatively, the first storage device 110 may transmit the interrupt signal for transmitting the update information INF_u to the second host H2 through the CXL switch SW_CXL.

The interrupt handler 101a of the second host H2 may transfer the update information INF_u to the metadata manager 101b in response to the interrupt signal. Alternatively, the interrupt handler 101a of the second host H2 may activate the metadata manager 101b in response to the interrupt signal, and the metadata manager 101b thus activated may receive the update information INF_u through the CXL switch SW_CXL.

The metadata manager 101b may update the second metadata MD2 based on the received update information INF_u. For example, the metadata manager 101b may update a portion of information of second metadata MD2. The portion of information of second metadata MD2 may be information corresponding to an address included in the update information INF_u. In an embodiment, the metadata manager 101b may be implemented in the form of software, firmware, hardware, or a combination thereof.

In an embodiment, the update information INF_u may include area information (e.g., ADDR1) of metadata (e.g., MD1), which is updated by any other host (e.g., H1). In this case, area information (e.g., ADDR1) may be in form of the logical block address LBA or the memory physical address PA. The metadata manager 101b may provide a function (e.g., inverse_filemap) of searching for an area (e.g., a file system area or a system memory area) of metadata, which corresponds to an address included in update information.

A configuration and update operation in the interrupt manner described with reference to FIG. 8 may be one embodiment according to the invention, but the present invention is not limited thereto.

For example, each of the plurality of storage devices 110 to 130 may transmit or multicast the update information INF_u to the plurality of hosts H1 to H4 by using various types of responses (e.g., S2M NDR (No Data Response) and S2M DRS (Data Response)) and various types of formats (e.g., D2H and S2M formats), which are supported by the CXL standard.

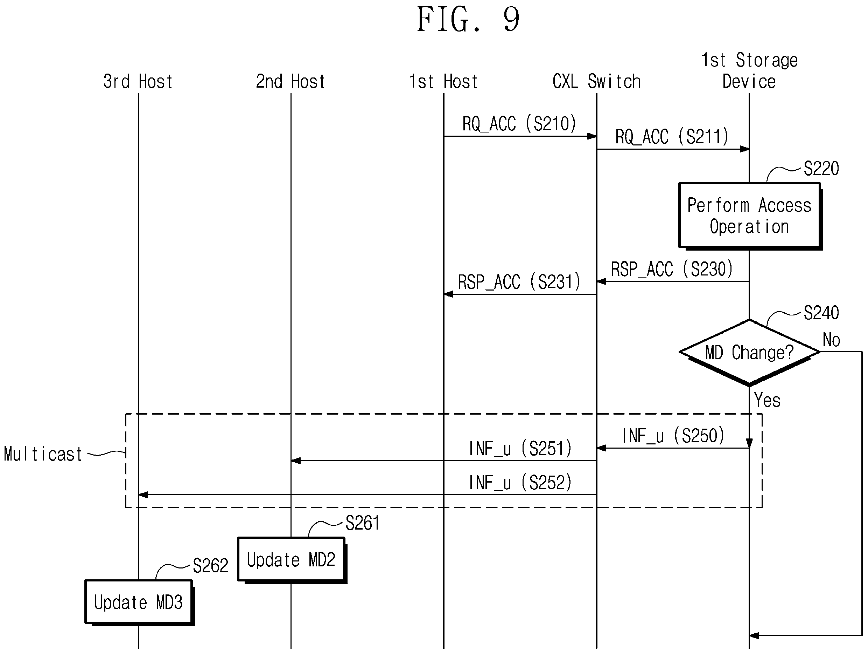

FIG. 9 is a flowchart illustrating an operation of a storage system described with reference to FIGS. 7A and 7B. Referring to FIGS. 2, 7A, 7B, and 9, in operation S210, the first host H1 may transmit the access request RQ_ACC to the CXL switch SW_CXL. As described with reference to FIG. 7A, the access request RQ_ACC may be the write request for the area corresponding to the first address ADDR1.

In operation S211, the CXL switch SW_CXL may transfer the access request RQ_ACC to the first storage device 110.

In operation S220, the first storage device 110 may perform the access operation corresponding to the access request RQ_ACC received from the CXL switch SW_CXL. For example, as described with reference to FIG. 7A, the first storage device 110 may write the write data in the area corresponding to the first address ADDR1 in response to the access request RQ_ACC.

In operation S230, the first storage device 110 may transmit an access response RSP_ACC for the access request RQ_ACC to the CXL switch SW_CXL. In operation S231, the CXL switch SW_CXL may transfer the access response RSP_ACC to the first host H1. The first host H1 may recognize that the operation corresponding to the access request RQ_ACC is completed, based on the access response RSPACC.

In operation S240, the first storage device 110 may determine whether metadata are updated or changed. For example, as illustrated in FIG. 7B, the first coherence circuit 111c of the first storage device 110 may determine whether the first metadata MD1 is updated or changed, based on the access request RQ_ACC received from the first host H1.

When it is determined that there is no update of the first metadata MD1, the first storage device 110 may not perform any further operation. When it is determined that the first metadata MD1 are updated, in operation S250, the first storage device 110 may transmit the update information INF_u to the CXL switch SW_CXL. As described with reference to FIG. 7B, the update information INF u may include information about the first address ADDR1 and size information. In an embodiment, based on the share table ST, the first storage device 110 may transfer the update information INF u to the CXL switch SW_CXL together with the second port identifier PID_H2/second callback parameter cbp_H2 of the second host H2 and the third port identifier PID_H3/third callback parameter cbp_H3 of the third host H3

In operation S251, the CXL switch SW_CXL may transfer the update information INF u to the second host H2. In operation S252, the CXL switch SW_CXL may transfer the update information INF u to the third host H3. The CXL switch SW_CXL may transmit the update information INF u to each of the second host H2 and the third host H3 based on the information (e.g., PID_H2/cbp_H2 and PID_H3/cbp_H3) received together with the update information INF_u. For example, the CXL switch SW_CXL may transmit the update information INF_u based on the PID_H2/cbp_H2 (i.e., PID_H2 and cbp_H2) and PID_H3/cbp_H3.

In an embodiment, operation S250 to operation S252 may constitute a multicasting operation. Multicasting operation refers to a method to transmit data or information from one sender to multiple recipients simultaneously. Unlike unicasting, multicasting allows a sender to efficiently send data of information to a select group of receivers.

In operation S261, the second host H2 may update the second metadata MD2 based on the update information INF_u. In operation S262, the third host H3 may update the third metadata MD3 based on the update information INF_u. Because operation S261 and operation S262 are described with reference to FIGS. 7B and 8, repeated description of identical, similar or functionally equivalent elements (or operations) may not be given to avoid redundancy.

In an embodiment of the present invention, a set of operations of the system 100 may be performed repeatedly, such as the following set of operations. For example, the first storage device 110 may receive an access request from the second host H2 through the CXL switch SW_CXL. The first storage device 110 may perform an operation corresponding to the access request from the second host H2. The first storage device 110 may detect a change in second metadata MD2 managed by the second host H2, based on the access request from the second host H2. The first storage device 110 may transmit update information corresponding to the change in the second metadata MD2 to the first host H1 through the CXL switch SW_CXL. The first and second host H1 and H2 may share the first storage device 110.

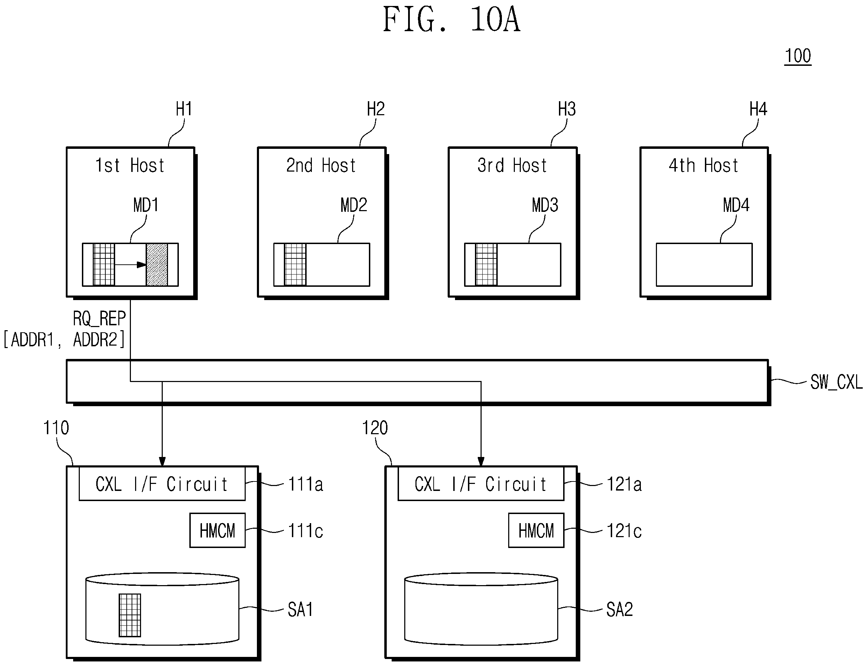

FIGS. 10A to 10C are diagrams for describing an operation of a storage system of FIG. 2. For brevity of drawing and for convenience of description, some components are omitted in drawings, and description associated with the components described above is omitted.

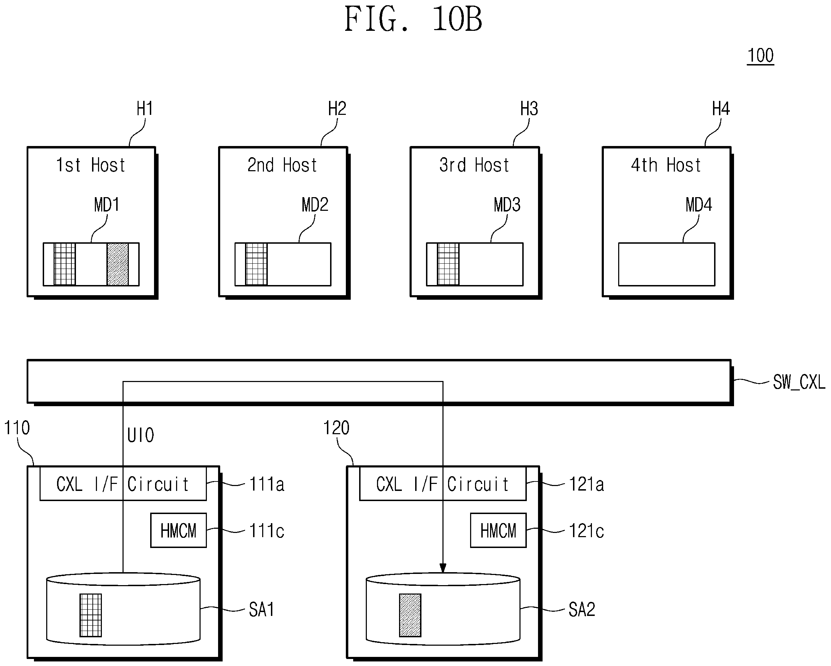

As illustrated in FIGS. 10A and 10B, the first host H1 may perform an operation of replicating first data stored in the area of the first address ADDR1 into an area of a second address ADDR2. In an embodiment, the area of the first address ADDR1 may be included in the first storage area SA1 of the first storage device 110, and the area of the second address ADDR2 may be included in the second storage area SA2 of the second storage device 120. The first data stored in the first storage area SA1 may be replicated into the second storage area SA2 by the first host H1. As the first data stored in the area of the first address ADDR1 are replicated into the area of the second address ADDR2, the first host H1 may update the first metadata MD1.

For example, referring to FIG. 10A, the first host H1 may transmit a replica request RQ_REP to the first storage device 110 and the second storage device 120 through the CXL switch SW_CXL. In an embodiment, the replica request RQ_REP may include information about the first address ADDR1 (or a source address) indicating the area where the first data targeted for replication are stored and the second address ADDR2 (or a target address) indicating an area where the first data are to be copied. In an embodiment, each of the first and second addresses ADDR1 and ADDR2 may be in form of the logical block address LBA or the memory physical address PA.

Referring to FIG. 10B, the first storage device 110 and the second storage device 120 may perform a replica operation associated with the first data in response to the replica request RQ_REP received from the first host H1. For example, the first storage device 110 may transmit the first data stored in the area of the first address ADDR1 to the CXL switch SW_CXL through the CXL interface circuit 111a in response to the replica request RQ_REP. A CXL interface circuit 121a of the second storage device 120 may receive the first data from the CXL switch SW_CXL. The second storage device 120 may write the first data in the area of the second address ADDR2 included in the replica request RQ_REP. Accordingly, the first storage device 110 may transmit first data stored in the first storage device 110 to an external storage device (i.e., the second storage device 120) through the CXL switch SW_CXL in response to the replica request RQ_REP.

As described above, the first and second storage devices 110 and 120 may exchange data with each other through the CXL switch SW_CXL. In an embodiment, the first and second storage devices 110 and 120 may exchange data with each other in a P2P manner without the intervention of the hosts H1 to H4. In an embodiment, the first and second storage devices 110 and 120 may exchange data with each other through the CXL switch SW_CXL, based on an unordered IO (UIO) protocol. In an embodiment, the first and second storage devices 110 and 120 may exchange data with each other through the input/output request CXL.io or the memory access request CXL.mem.

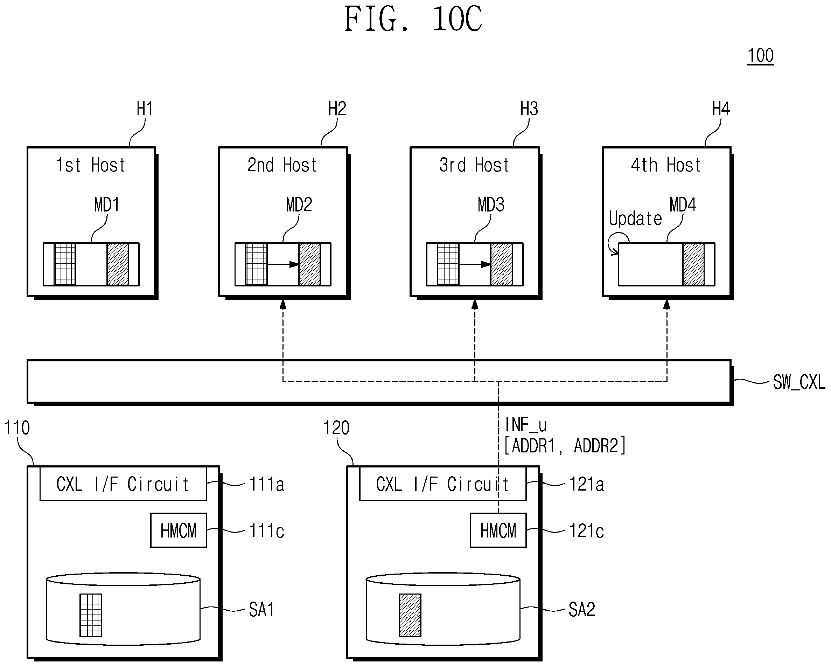

Referring to FIG. 10C, a second coherence circuit 121c of the second storage device 120 may detect the update of the first metadata MD1. For example, the second coherence circuit 121c of the second storage device 120 may detect the update of the first metadata MD1, based on the replica request RQ_REP. The information of the first metadata MD1, which is associated with the area of the second address ADDR2, may be updated. Accordingly, the second coherence circuit 121c may transmit or multicast the update information INF_u to the second to fourth hosts H2 to H4, which share the second storage area SA2. In an embodiment, the update information INF_u may include information about the first address ADDR1 as a source address and the second address ADDR2 as a target address.

The second, third, and fourth hosts H2, H3, and H4 may receive the update information INF_u through the CXL switch SW_CXL and may update the second, third, and fourth metadata MD2, MD3, and MD4 based on the received update information INF_u. Accordingly, the coherence for the second storage area SA2 may be maintained between the first to fourth metadata MD1 to MD4 which are managed by the first to fourth hosts H1 to H4 respectively.

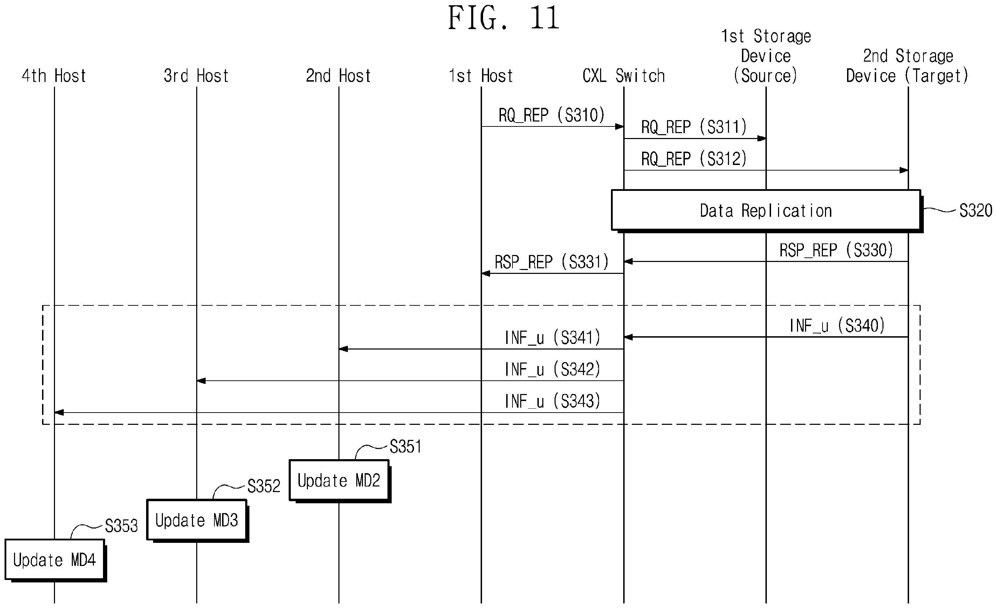

FIG. 11 is a flowchart illustrating an operation of a storage system described with reference to FIGS. 10A to 10C. For convenience of description, description associated with the components described above will be omitted to avoid redundancy.

Referring to FIGS. 2 and 10A to 11, in operation S310, the first host H1 may transmit the replica request RQ_REP to the CXL switch SW_CXL. In an embodiment, the replica request RQ_REP may include the first address ADDR1 corresponding to the first storage area SA1 and the second address ADDR2 corresponding to the second storage area SA2. The first address ADDR1 may be a source address, and the second address ADDR2 may be a target address.

In operation S311, the CXL switch SW_CXL may transfer the replica request RQ_REP to the first storage device 110. In operation S312, the CXL switch SW_CXL may transfer the replica request RQ_REP to the second storage device 120. In operation S320, the first and second storage devices 110 and 120 may perform a data replica operation in response to the replica request RQ_REP. For example, the first storage device 110 may transfer the first data stored in the area of the first storage device 110 to the second storage device 120 through the CXL switch SW_CXL, and the second storage device 120 may store the first data in the area corresponding to the second address ADDR2.

In operation S330, the second storage device 120 may transmit a replication response RSP_REP to the CXL switch SW_CXL. In operation S331, the CXL switch SW_CXL may transmit the replication response RSP_REP to the first host H1. In an embodiment, although not illustrated in FIG. 11, the first storage device 110 may transmit the replication response RSP_REP to the first host 11 through the CXL switch SW_CXL. The first host H1 may recognize that the replica operation is completed, based on the replication response RSP_REP.

In operation S340, the second storage device 120 may transmit the update information INF_u to the CXL switch SW_CXL. In operation S341, the CXL switch SW_CXL may transmit the update information INF_u to the second host H2. In operation S342, the CXL switch SW_CXL may transmit the update information INF_u to the third host H3. In operation S343, the CXL switch SW_CXL may transmit the update information INF_u to the fourth host H4.

In an embodiment, the share table ST of the second storage device 120 may include information (e.g., a port identifier and a callback parameter) about the hosts H1, H2, H3, and H4 sharing the second storage device 120. Based on the share table ST, the second storage device 120 may transfer the update information INF_u to the CXL switch SW_CXL together with the second port identifier PID_H2/second callback parameter cbp_H2 of the second host H2, the third port identifier PID_H3/third callback parameter cbp_H3 of the third host H3, and the fourth port identifier PID_H4/fourth callback parameter cbp_H4 of the fourth host H4. The CXL switch SW_CXL may transmit the update information INF u to each of the hosts H2, H3, and H4 based on the information (e.g., a port identifier and a callback parameter) received together with the update information INF u. In an embodiment, operation S340 to operation S343 may constitute a multicasting operation for the update information INF u.

In operation S351, the second host H2 may update the second metadata MD2 based on the update information INF_u. In operation S352, the third host H3 may update the third metadata MD3 based on the update information INF u. In operation S353, the fourth host H4 may update the fourth metadata MD4 based on the update information INF u.

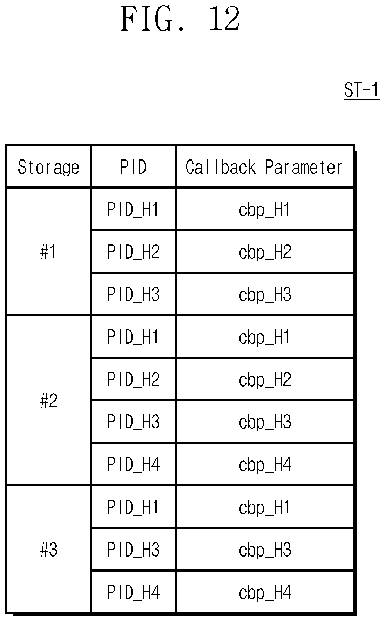

FIG. 12 is a diagram illustrating a share table included in a first storage device of FIG. 2. The difference between embodiments of FIGs 6 and 12 may lie in the nature of the information in the share tables. In FIG. 6, the share table ST of the first storage device 110 only contains information that the first storage device 110 is shared by which host. The share table ST-1 of the first storage device 110 may include information that each of the first to third storage device 110 to 103 is shared by which host.

In the embodiment described with reference to FIG. 6, the share table ST of the first storage device 110 includes the hosts H1, H2, and H3 sharing the first storage device 110 (i.e., itself).

In contrast, in the embodiment of FIG. 12, a share table ST-1 of the first storage device 110 may include information about which of the hosts H1 to H4 shares each of the first to third storage devices 110 to 130. For example, the share table ST-1 may include information PID_H1/cbp_H1, PID_H2/cbp_H2, and PID_H3/cbp_H3 about the first, second, and third hosts H1, H2, and H3 sharing the first storage device 110, may include information PID_H1/cbp_H1, PID_H2/cbp_H2, PID_H3/cbp_H3, and PID_H4/cbp_H4 about the first, second, third, and fourth hosts H1, H2, H3, and H4 sharing the second storage device 120, and may include information PID_H1/cbp_H1, PID_H3/cbp_H3, and PID_H4/cbp_H4 about the first, third, and fourth hosts H1, H3, and H4 sharing the third storage device 130.

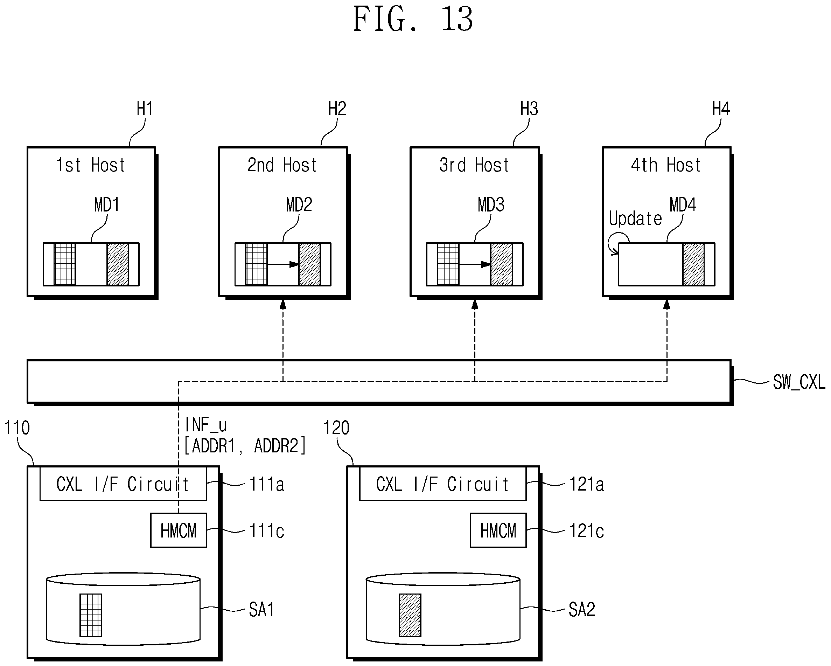

In an embodiment, when the share table ST-1 of the first storage device 110 includes information about the hosts H1 to H4 sharing any other storage devices (e.g., 120 and 130), the first storage device 110 may detect the update of metadata corresponding to the storage devices 120 and 130 and may transmit or multicast the update information to the hosts H1 to H4, as described below in conjunction with FIG. 13. Unlike this embodiment of FIG. 13, the second coherence circuit 121c of the second storage device 120 transmits or multicasts the update information to the related hosts in FIG. 10C.

FIG. 13 is a diagram for describing an operation of a storage system of FIG. 2. For convenience of description, description associated with the components described above will be omitted to avoid redundancy. Referring to FIGS. 1, 12, and 13, data included in the first storage device 110 may be replicated into the second storage device 120 by the first host H1. In this case, the first host H1 may update the first metadata MD1 corresponding to the second storage area SA2 of the second storage device 120.

In this case, based on the share table ST-1, the first storage device 110 may transmit the update information INF_u to the second, third, and fourth hosts H2, H3, and H4 sharing the second storage area SA2 of the second storage device 120. In this case, the update information INF_u may include the first address ADDR1 as a source address and the second address ADDR2 as a target address.

The second, third, and fourth hosts H2, H3, and H4 may update the second, third, and fourth metadata MD2, MD3, and MD4 corresponding to the second storage area SA2, based on the update information INF_u received from the first storage device 110 through the CXL switch SW_CXL.

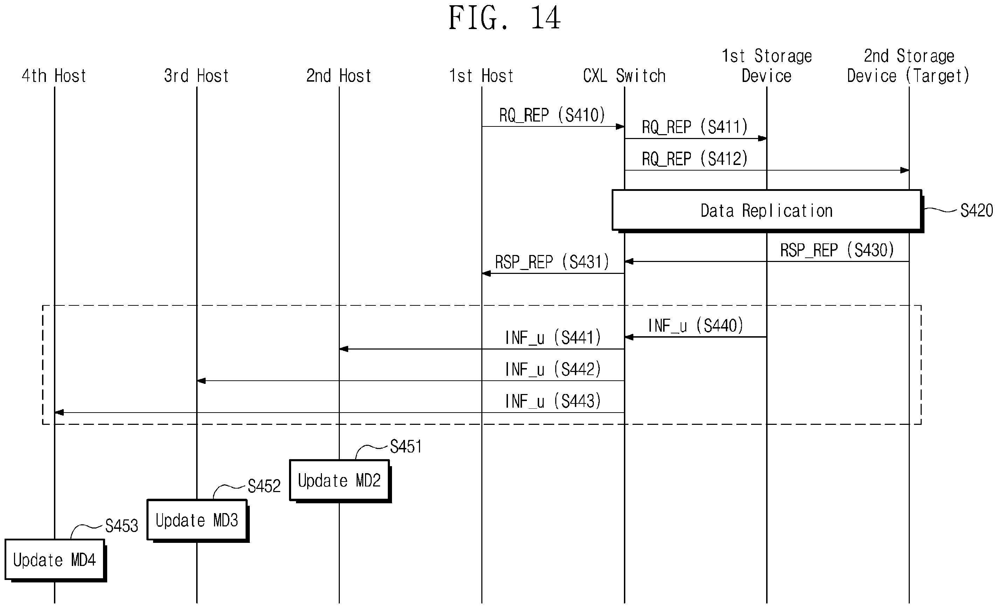

FIG. 14 is a flowchart illustrating an operation of a storage system according to an embodiment of FIG. 13. Referring to FIGS. 2 and 12 to 14, the first host H1, the CXL switch SW_CXL, the first storage device 110, and the second storage device 120 may perform operation S410 to operation S431. Operation S410 to operation S431 are similar to operation S310 to operation S331 of FIG. 11, and thus, repeated description of identical, similar or functionally equivalent elements (or operations) may not be given to avoid redundancy.

In operation S440, the first storage device 110 may transmit the update information INF_u to the CXL switch SW_CXL. For example, based on the replica request RQ_REP in operation S411, the first storage device 110 may detect that metadata corresponding to the second storage area SA2 of the second storage device 120 is updated. In this case, the first storage device 110 may transmit the update information INF_u of the metadata to the CXL switch SW_CXL. In an embodiment, based on the share table ST-1, the first storage device 110 may transmit the information PID_H2/cbp_H2, PID_H3/cbp_H3, and PID_H4/cbp_H4 about the hosts H2, H3, and H4 sharing the second storage device 120 to the CXL switch SW_CXL together with the update information INF_u.

Afterwards, the CXL switch SW_CXL and the second to fourth hosts H2 to H4 may perform operation S441 to operation S453. Operation S441 to operation S453 are similar to operation S341 to operation S353 of FIG. 11, and thus, repeated description of identical, similar or functionally equivalent elements (or operations) may not be given to avoid redundancy.

As described above, according to an embodiment of the present invention, the first host H1 may control data replication between the first and second storage devices 110 and 120 connected to the CXL switch SW_CXL. In this case, the first and second storage devices 110 and 120 may exchange data with each other through the P2P manner. Also, at least one of the first and second storage devices 110 and 120 may detect the update of metadata and may multicast the detected update information INF_u to hosts corresponding thereto.

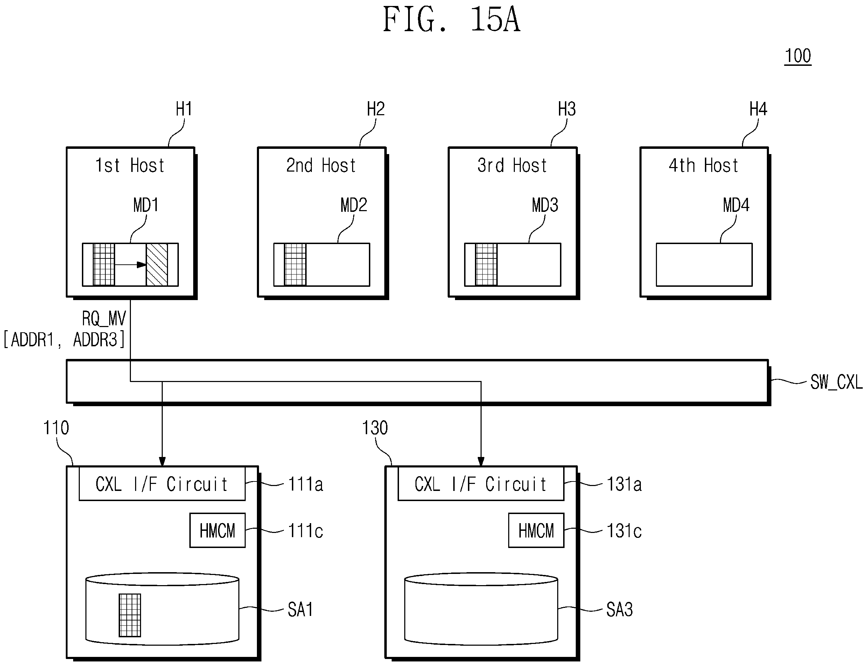

FIGS. 15A to 15D are diagrams for describing an operation of a storage system of FIG. 2. For brevity of drawing and for convenience of description, some components are omitted in drawings, and description associated with the components described above is omitted.

First, as illustrated in FIG. 15A, the first host H1 may perform an operation of moving the first data stored in the area of the first address ADDR1 into an area of a third address ADDR3. In an embodiment, the area corresponding to the first address ADDR1 may be included in the first storage area SA1 of the first storage device 110, and the area corresponding to the third address ADDR3 may be included in the third storage area SA3 of the third storage device 130. For example, the first data stored in the first storage area SA1 may be moved into the third storage area SA3 by the first host H1.

In this case, the first host H1 may transmit a move request RQ_MV to the first storage device 110 and the third storage device 130 through the CXL switch SW_CXL. In an embodiment, the move request RQ_MV may include information about the first address ADDR1 (or a source address) indicating the area where the first data targeted for movement are stored and the third address ADDR3 (or a target address) indicating the area where the first data are to be moved. In an embodiment, each of the first and third addresses ADDR1 and ADDR3 may be in form of the logical block address LBA or the memory physical address PA.

As the first data stored in the area of the first address ADDR1 are moved to the area of the third address ADDR3, the first host H1 may update the first metadata MD1. For example, the first host H1 may update the first metadata MD1 such that information of the area corresponding to the first address ADDR1 is deleted or invalidated, and information of the area corresponding to the third address ADDR3 is newly added.

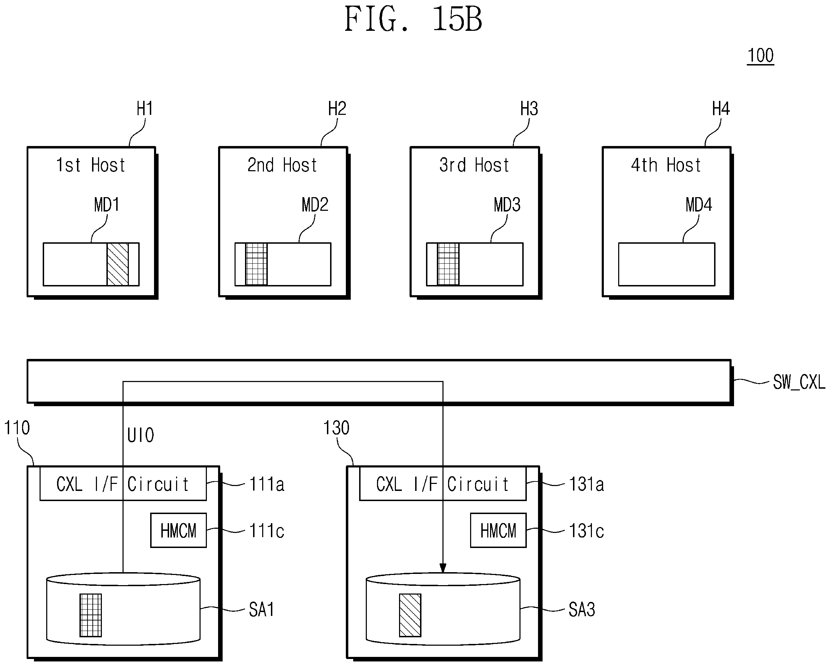

Next, referring to FIG. 15B, the first and third storage devices 110 and 130 may perform a move operation associated with the first data in response to the move request RQ_MV. For example, the first storage device 110 may transmit the first data stored in the area of the first address ADDR1 to the CXL switch SW_CXL through the CXL interface circuit 111a in response to the move request RQ_MV. A CXL interface circuit 131a of the third storage device 130 may receive the first data from the CXL switch SW_CXL. The third storage device 130 may write the first data in the area of the third address ADDR3 included in the move request RQ_MV. The first storage device 110 may delete the first data stored in the area of the first address ADDR1.

As described above, the first and third storage devices 110 and 130 may exchange data with each other through the CXL switch SW_CXL. In this case, the data transmission between the first and third storage devices 110 and 130 is similar to that described with reference to FIG. 10B, and thus, repeated description of identical, similar or functionally equivalent elements (or operations) may not be given to avoid redundancy.

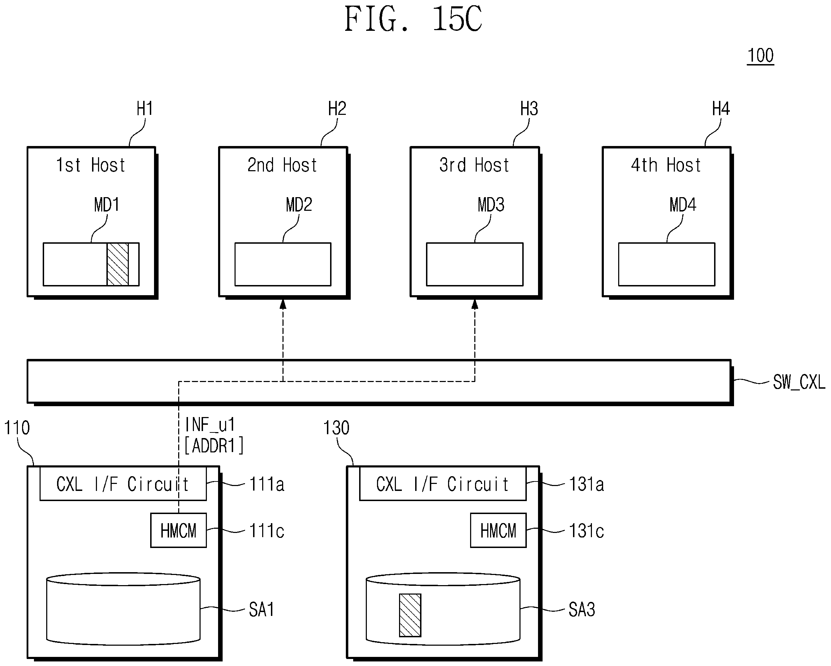

Then, referring to FIG. 15C, the first coherence circuit 111c of the first storage device 110 may detect the update of the first metadata MD1. For example, based on the move request RQ_MV, the first coherence circuit 111c of the first storage device 110 may detect that information about the area corresponding to the first address ADDR1 is updated in the first metadata MD1 of the first host H1.

In response to detection of the update of the first metadata MD1, the first coherence circuit 111c of the first storage device 110 may multicast first update information INF_u1 about the first address ADDR1. For example, it may be performed to check the information (i.e., PID_H2/cbp_H2 and PID_H3/cbp_H3) about the second and third hosts H2 and H3 sharing the first storage area SA1 of the first storage device 110, based on the share table ST (refer to FIG. 6) of the first storage device 110. The first coherence circuit 111c of the first storage device 110 may multicast the first update information INF_u1 to the second and third hosts H2 and H3 through the CXL switch SW _CXL, based on the information PID_H2/cbp_H2 and PID_H3/cbp_H3 about the second and third hosts H2 and H3. In an embodiment, the first update information INF_u1 may include information about the first address ADDR1 corresponding to the first storage area SA1 of the first storage device 110.

The second and third hosts H2 and H3 may respectively update the second and third metadata MD2 and MD3, based on the first update information INF_u1 received through the CXL switch SW_CXL. For example, the second host H2 may update the second metadata MD2 such that information of the area corresponding to the first address ADDR1 is deleted or invalidated, and the third host H3 may update the third metadata MD3 such that information of the area corresponding to the first address ADDR1 is deleted or invalidated.

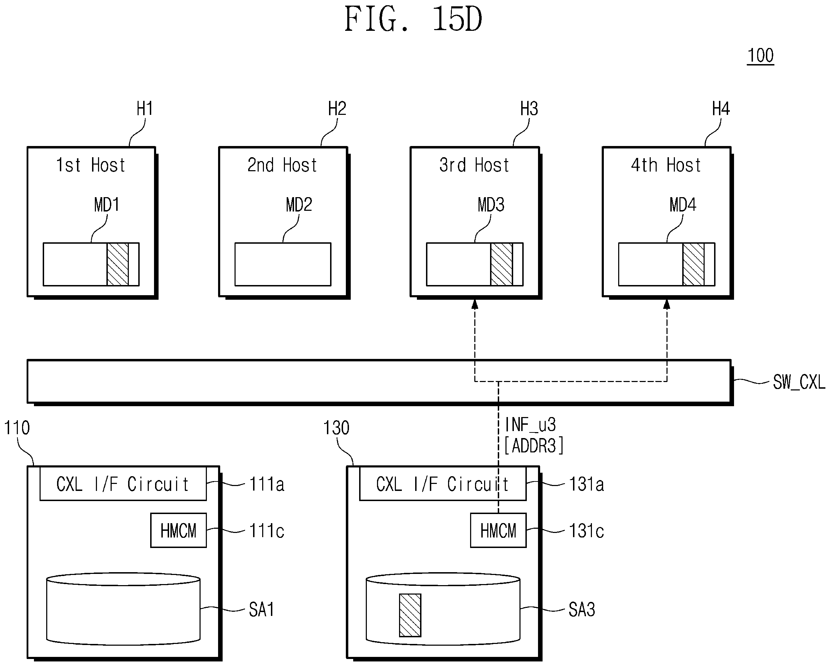

Then, referring to FIG. 15D, a third coherence circuit 131c of the third storage device 130 may detect the update of the first metadata MD1. For example, based on the move request RQ_MV, the third coherence circuit 131c of the third storage device 130 may detect that information about the area corresponding to the third address ADDR3 is updated in the first metadata MD1 of the first host H1.

In response to detecting the update of the first metadata MD1, the third coherence circuit 131c of the third storage device 130 may multicast third update information INF_u3 about the third address ADDR3. For example, as described with reference to FIG. 4, the third storage device 130 may be shared by the first, third, and fourth hosts H1, H3, and H4. In this case, a share table included in the third storage device 130 may include the information PID_H1/cbp_H1, PID_H3/cbp_H3, and PID_H4/cbp_H4 about the first, third, and fourth hosts H1, H3, and H4. The third storage device 130 may check the information PID_H3/cbp_H3 and PID_H4/cbp_H4 about the third and fourth hosts H3 and H4 sharing the third storage area SA3 of the third storage device 130, based on the share table. The third storage device 130 may multicast the third update information INF_u3 to the third and fourth hosts H3 and H4 through the CXL switch SW_CXL, based on the information PID_H3/cbp_H3 and PID_H4/cbp_H4 about the third and fourth hosts H3 and H4. In an embodiment, the third update information INF_u3 may include information about the third address ADDR3 corresponding to the third storage area SA3 of the third storage device 130.

The third and fourth hosts H3 and H4 may respectively update the third and fourth metadata MD3 and MD4, based on the third update information INF_u3 received through the CXL switch SW_CXL. For example, the third host H3 may update the third metadata MD3 such that information of the area corresponding to the third address ADDR3 is changed, and the fourth host H4 may update the fourth metadata MD4 such that information of the area corresponding to the third address ADDR3 is changed. As a result, the coherence may be maintained between the first to fourth metadata MD1 to MD4 of the first to fourth hosts H1 to H4.

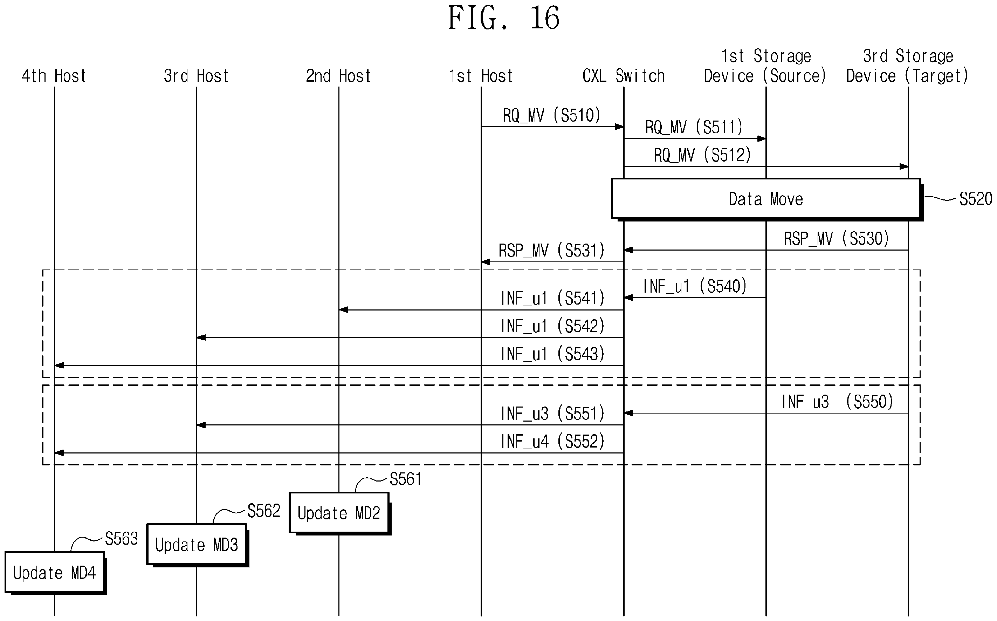

FIG. 16 is a flowchart illustrating an operation of a storage system of FIGS. 15A to 15D. For convenience of description, description associated with the components described above will be omitted to avoid redundancy. Referring to FIGS. 2 and 15A to 16, in operation S510, the first host H1 may transmit the move request RQ_MV to the CXL switch SW_CXL. In operation S511, the CXL switch SW_CXL may transfer the move request RQ_MV to the first storage device 110. In operation S512, the CXL switch SW_CXL may transfer the move request RQ_MV to the third storage device 130. In operation S520, the first and third storage devices 110 and 130 may perform the move operation associated with the first data through the CXL switch SW_CXL in response to the move request RQ_MV.

In operation S530, the third storage device 130 may transmit a response RSP_MV to the move request RQ_MV to the CXL switch SW_CXL. In operation S531, the CXL switch SW_CXL may transfer the response RSP_MV to the move request RQ_MV to the first host H1.

In operation S540, the first storage device 110 may transmit the first update information INF_u1 to the CXL switch SW_CXL. The first update information INF_u1 may include information about the update of metadata corresponding to the first storage area SA1 of the first storage device 110.

In an embodiment, the first storage device 110 may be shared by the first, second, third, and fourth hosts H1, H2, H3, and H4. Information of the first metadata MD1, which is associated with the first storage area SA1, may be updated by the first host H1, and thus, the first storage device 110 may multicast the first update information INF_u1 to the remaining hosts H2, H3, and H4. To this end, the first storage device 110 may transmit information PID_H2/cbp_H2, PID_H3/cbp_H3, and PID_H4/cbp_H4 about the remaining hosts H2, H3, and H4 to the CXL switch SW_CXL together with the first update information INF_u1.

In operation S541, the CXL switch SW_CXL may transfer the first update information INF_u1 to the second host H2. In operation S542, the CXL switch SW_CXL may transfer the first update information INF_u1 to the third host H3. In operation S543, the CXL switch SW_CXL may transfer the first update information INF_u1 to the fourth host H4.

In operation S550, the third storage device 130 may transmit the third update information INF_u3 to the CXL switch SW_CXL. The third update information INF_u3 may include information about the update of metadata corresponding to the third storage area SA3 of the third storage device 130.

In an embodiment, the third storage device 130 may be shared by the first, third, and fourth hosts H1, H3, and H4. Information of the first metadata MD1, which is associated with the third storage area SA3, may be updated by the first host H1, and thus, the third storage device 130 may multicast the third update information INF_u3 to the remaining hosts H3 and H4. To this end, the third storage device 130 may transmit information PID_H3/cbp_H3 and PID_H4/cbp_H4 about the remaining hosts H3 and H4 to the CXL switch SW_CXL together with the third update information INF_u3.

In operation S551, the CXL switch SW_CXL may transfer the third update information INF_u3 to the third host H3. In operation S552, the CXL switch SW_CXL may transfer the third update information INF_u3 to the fourth host H4.

In operation S561, the second host H2 may update the second metadata MD2 based on the first update information INF_u1. In operation S562, the third host H3 may update the third metadata MD3 based on the first update information INF_u1 and the third update information INF_u3. In operation S563, the fourth host H4 may update the fourth metadata MD4 based on the first update information INF_u1 and the third update information INF_u3.

As described above, each of the plurality of storage devices 110, 120, and 130 may be shared by the plurality of hosts H1, H2, H3, and H4. In this case, each of the plurality of storage devices 110, 120, and 130 may detect the change or update of metadata corresponding to a storage area thereof and may multicast update information to any other hosts sharing each of the plurality of storage devices 110, 120, and 130. Each of the plurality of hosts H1, H2, H3, and H4 may update metadata based on the received update information. Accordingly, without individual communication or protocols between the plurality of hosts H1, H2, H3, and H4, the coherence may be maintained between a plurality of metadata respectively managed by the plurality of hosts H1, H2, H3, and H4.

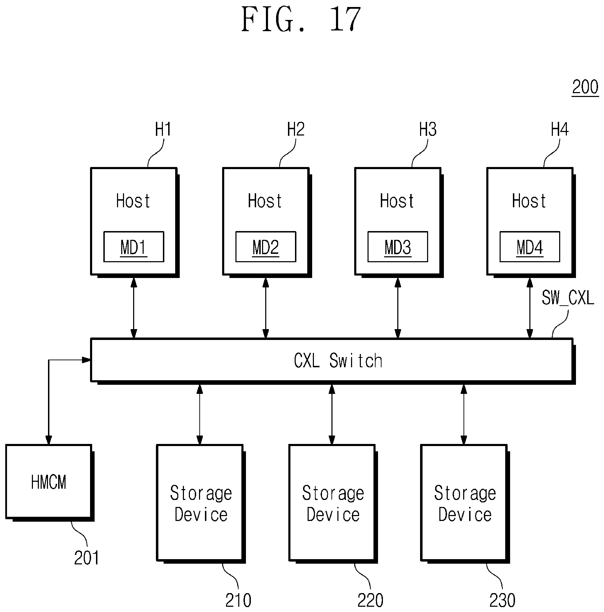

FIG. 17 is a block diagram illustrating a storage system according to an embodiment of the present invention. Referring to FIG. 17, a storage system 200 may include the plurality of hosts H1, H2, H3, and H4, the CXL switch SW_CXL, the plurality of storage devices 210, 220, and 230, and a coherence device 201. The coherence device 201 may include the metadata coherence circuit 111c as described herein, thus, repeated description of the same may be omitted may to avoid redundancy. In addition, the coherence device 201 may include its own CXL interface circuit, which may be the same as the CXL interface circuit 111a of FIG. 2. Through (i.e., by using) the CXL interface circuit, the coherence device 201 may communicate with the CXL switch SW_CXL to perform operations described below.

As in the above description given with reference to FIG. 2, the plurality of hosts H1, H2, H3, and H4 may access the plurality of storage devices 210, 220, and 230 through the CXL switch SW _CXL. In this case, the plurality of hosts H1, H2, H3, and H4 may manage storage areas to the plurality of storage devices 210, 220, and 230 based on the first to fourth metadata MD1, MD2, MD3, and MD4.

As in the above description, the plurality of hosts H1, H2, H3, and H4 may share the plurality of storage devices 210, 220, and 230. In this case, the coherence device 201 may detect any change of the metadata, which is made by the plurality of hosts H1 to H4, based on each access requests which the plurality of hosts H1 to H4 issue to access the plurality of storage devices 210, 220, and 230. When the update of metadata is detected, the coherence device 201 may transmit update information to the corresponding hosts.

For example, the first host H1 may issue a first access request to access the first storage area SA1 of the first storage device 210. The first storage device 210 may perform the access to the first storage area SA1 in response to the first access request. Accordingly, the first host H1 may update the first metadata MD1 such that information about the first storage area SA1 is changed. The coherence device 201 may snoop or check the first access request through the CXL switch SW_CXL. The coherence device 201 may detect the update of the first metadata MD1, which is made by the first host H1 such that the information about the first storage area SA1 is changed. In this case, the coherence device 201 may multicast update information to any other hosts (e.g., H2, H3, and H4) sharing the first storage device 210 through the CXL switch SW_CXL, and the hosts H2, H3, and H4 may update metadata based on the update information INF_u received through the CXL switch SW_CXL. Accordingly, without individual communication or protocols between the hosts H1 to H4, the coherence may be maintained between metadata managed by the hosts H1 to H4.

In an embodiment, the coherence device 201 may include a share table in which information about a sharing relationship between the plurality of hosts H1 to H4 and the plurality of storage devices 210 to 230 is stored. For example, the plurality of hosts H1 to H4 and the plurality of storage devices 210 to 230 may have the sharing relationship described with reference to FIG. 4. In this case, the coherence device 201 may include the share table ST-1 described with reference to FIG. 12. The coherence device 201 may multicast the update information INF_u based on the share table ST-1. In an embodiment, the structure (or architecture) of the storage system 200 may be changed such that a new host (or storage device) is added, an existing host (or storage device) is replaced by a new one, or an existing host (or storage device) is removed. When those kinds of changes occur, the share table ST-1 may be updated.

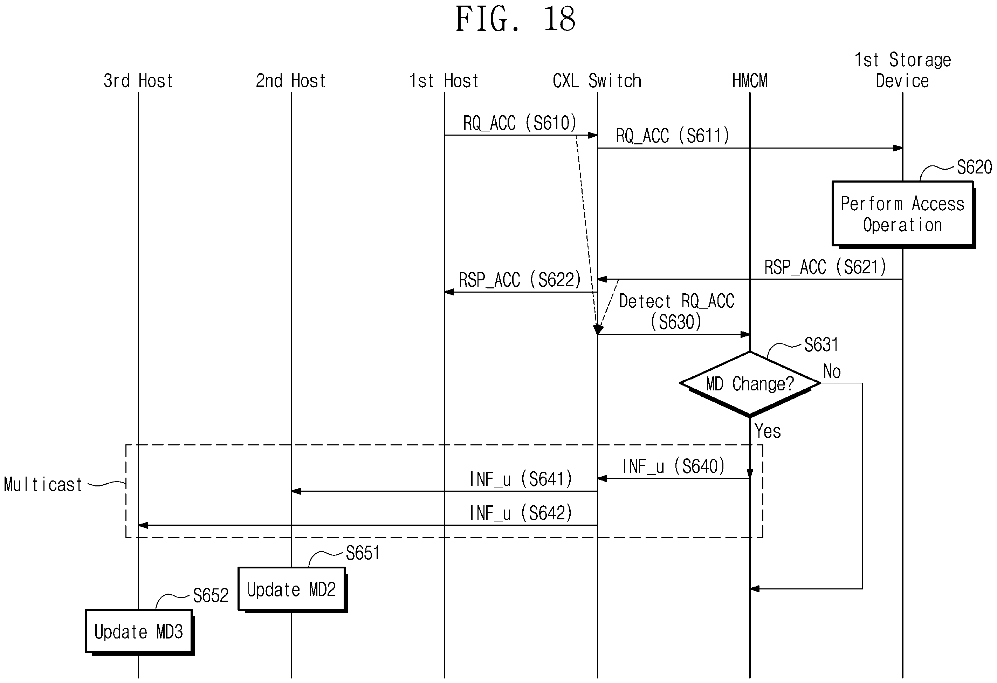

FIG. 18 is a flowchart illustrating an operation of a storage system of FIG. 17. For convenience of description, it is assumed that the first storage device 210 is shared by the first, second, and third hosts H1, H2, and H3 and the first host H1 performs the access to the first storage device 210 and updates information of the first metadata MD1, which corresponds to the first storage area SA1 of the first storage device 210. However, the present invention is not limited thereto. For example, the storage system 200 may perform various operations (e.g., a data replica operation and a data move operation) described with reference to FIGS. 1 to 17.

Referring to FIGS. 17 and 18, the first host H1, the CXL switch SW_CXL, and the first storage device 210 may perform operation S610 to operation S622. Operation S610 to operation S622 are similar to operation S210 to operation S231 of FIG. 9, and thus, repeated description of identical, similar or functionally equivalent elements (or operations) may not be given to avoid redundancy.

In operation S630, the coherence device 201 (HMCM) may detect the access request RQ_ACC through the CXL switch SW_CXL. For example, the coherence device 201 may be configured to snoop or monitor the CXL switch SW_CXL. The coherence device 201 may detect the access request RQ_ACC transferred from the first host H1 to the first storage device 210 through the CXL switch SW_CXL. Alternatively, the coherence device 201 may detect an access response RSP_ACC transferred from the first storage device 210 to the first host H1 through the CXL switch SW_CXL.

In operation S631, the coherence device 201 may determine whether there is updated information of the first metadata MD1, which is associated with the first storage area SA1, based on the access request RQ_ACC (or the access response RSP_ACC). A configuration for determining whether there is updated information of the first metadata MD1, which is associated with the first storage area SA1, is described above, and thus, repeated description of identical, similar or functionally equivalent elements (or operations) may not be given to avoid redundancy.

When it is determined that the update of the first metadata MD1 is not made, the coherence device 201 may not perform a separate operation.

When it is determined that the update of the first metadata MD1 is made, in operation S640, the coherence device 201 may transmit the update information INF_u to the CXL switch SW_CXL. The update information INF_u may include information which is updated by the access request RQ_ACC in association with the first storage area SA1 of the first storage device 210. In operation S641, the CXL switch SW_CXL may transfer the update information INF_u to the second host H2. In operation S642, the CXL switch SW_CXL may transfer the update information INF u to the third host H3.

In an embodiment, based on a share table, the coherence device 201 may transmit the information (e.g., PID_H2/cbp_H1, PID_H3/cbp_H2, and PID_H4/cbp_H3) about hosts (e.g., H1, H2, and H3) sharing the first storage device 210 to the CXL switch SW_CXL together with the update information INF u. The CXL switch SW_CXL may multicast the update information INF u to the second and third hosts H2 and H3 based on the above information.

In operation S651, the second host H2 may update the second metadata MD2 based on the update information INF u. In operation S652, the third host H3 may update the third metadata MD3 based on the update information INF u.

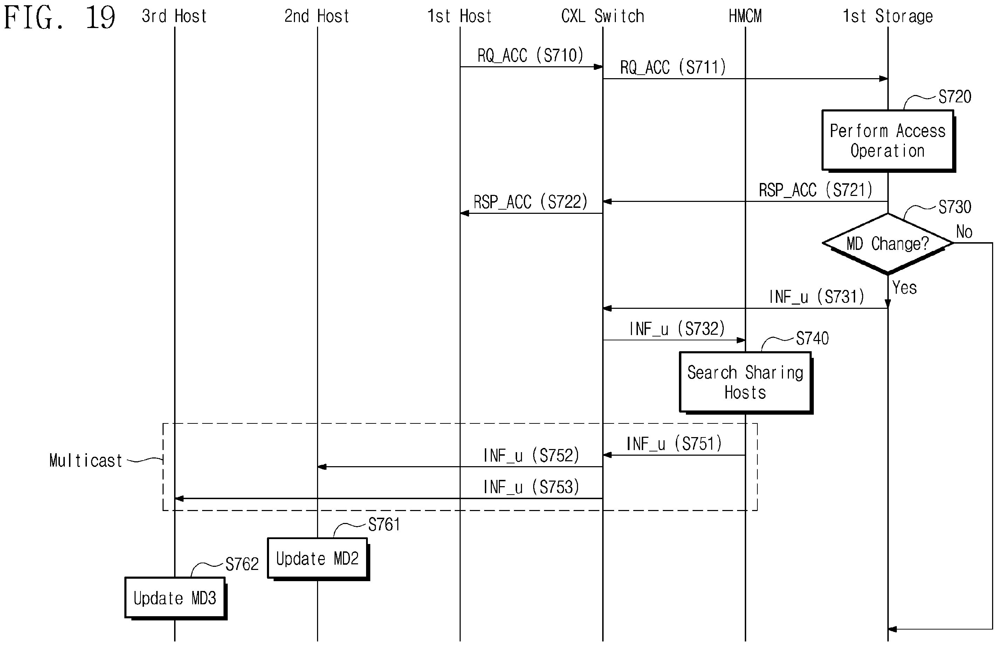

FIG. 19 is a flowchart illustrating an operation of a storage system of FIG. 17. Referring to FIGS. 17 and 19, the first host H1, the CXL switch SW_CXL, and the first storage device 210 may perform operation S710 to operation S722. Operation S710 to operation S722 are similar to operation S210 to operation S231 of FIG. 9, and thus, repeated description of identical, similar or functionally equivalent elements (or operations) may not be given to avoid redundancy.

In operation S730, the first storage device 210 may determine whether the first metadata MD1 are updated. Operation S730 is similar to operation S240 of FIG. 9, and thus, repeated description of identical, similar or functionally equivalent elements (or operations) may not be given to avoid redundancy. When it is determined that the update of the first metadata MD1 is not made, the first storage device 210 may not perform a separate operation.

When it is determined that the update of the first metadata MD1 is made, in operation S731, the first storage device 210 may transmit the update information INF_u about the first metadata MD1 to the CXL switch SW_CXL. In an embodiment, the update information INF_u may include information of the first metadata MD1, which corresponds to an area belonging to the first storage area SA1. In operation S732, the CXL switch SW_CXL may transfer the update information INF_u to the coherence device 201.

In operation S740, the coherence device 201 may search for sharing hosts based on the received update information INF_u. For example, when the update information INF_u includes information or an address associated with the first storage area SA1 of the first storage device 210, the coherence device 201 may search for hosts (e.g., H1, H2, and H3) sharing the first storage device 210, based on a share table. Afterwards, the coherence device 201, the CXL switch SW_CXL, the second host H2, and the third host H3 may perform operation S751 to operation S762. Operation S751 to operation S762 are similar to operation S640 to operation S652 described with reference to FIG. 18, and thus, repeated description of identical, similar or functionally equivalent elements (or operations) may not be given to avoid redundancy.

As described above, according to an embodiment of the present invention, the plurality of hosts H1 to H4 and the plurality of storage devices 210 to 230 may communicate with each other through the CXL switch SW_CXL. The coherence device 201 may be connected to the CXL switch SW_CXL. Based on access requests transmitted to the plurality of storage devices 210 to 230 or update information provided from the plurality of storage devices 210 to 230, the coherence device 201 may detect whether metadata are updated by the plurality of hosts H1 to H4 and may multicast update information to the plurality of hosts H1 to H4. The plurality of hosts H1 to H4 may update the corresponding metadata based on the update information. Accordingly, without separate communication or protocols between the plurality of hosts H1 to H4, the coherence may be maintained between a plurality of metadata of the plurality of hosts H1, H2, H3, and H4.

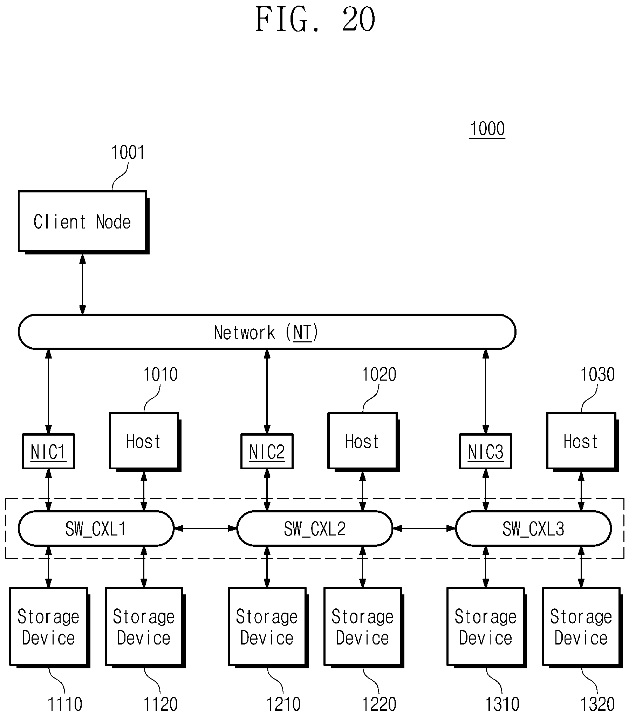

FIG. 20 is a block diagram illustrating a topology of a storage system according to an embodiment of the present invention. Referring to FIG. 20, a storage system 1000 may include a client node 1001, a network NT, a plurality of hosts 1010 to 1030, a plurality of network interface controllers NIC1 to NIC3, a plurality of CXL switches SW_CXL1 to SW_CXL3, and a plurality of storage devices 1110 to 1320. In an embodiment, the storage system 1000 may be a disaggregated storage system. For example, in the structure illustrated in FIG. 20, a new host is added, an existing host is replaced by a new one, or an existing host is removed.

The client node 1001 may be connected to the network NT. The client node 1001 may be a system or computing node which requests various operations or functions from the storage system 1000 over the network NT. In an embodiment, the network NT may be implemented based on various protocols such as a TCP/IP network protocol, a Fibre channel (FC) protocol, an Ethernet protocol, a storage-dedicated network protocol such as a storage area network protocol, an FC over Ethernet (FCoE) protocol, a network attached storage (NAS) protocol, and an NVMe over Fabrics (NVMe-oF) protocol.

The plurality of network interface controllers NIC1 to NIC3 may be connected to the network NT. The plurality of network interface controllers NIC1 to NIC3 may be respectively connected to the plurality of CXL switches SW_CXL1 to SW_CXL3. The plurality of network interface controllers NIC1 to NIC3 may be configured to provide the interface between the network NT and the plurality of CXL switches SW_CXL1 to SW_CXL3. In an embodiment, the plurality of network interface controllers NIC1 to NIC3 may be configured to support the PCIe protocol.

The plurality of hosts 1010, 1020, and 1030 may be respectively connected to the plurality of CXL switches SW_CXL1 to SW_CXL3. The storage devices 1110 and 1120 may be connected to the first CXL switch SW_CXL1, the storage devices 1210 and 1220 may be connected to the second CXL switch SW_CXL2, and the storage devices 1310 and 1320 may be connected to the third CXL switch SW_CXL3. The plurality of CXL switches SW_CXL1 to SW_CXL3 may communicate with each other.

In an embodiment, the plurality of hosts 1010, 1020, and 1030 and the client node 1001 may be the plurality of hosts H1 to H4 described with reference to FIGS. 1 to 19, and the plurality of storage devices 1110 to 1320 may be the storage devices 110 to 130 described with reference to FIGS. 1 to 19. The storage system 1000 may operate based on the operation method described with reference to FIGS. 1 to 19.

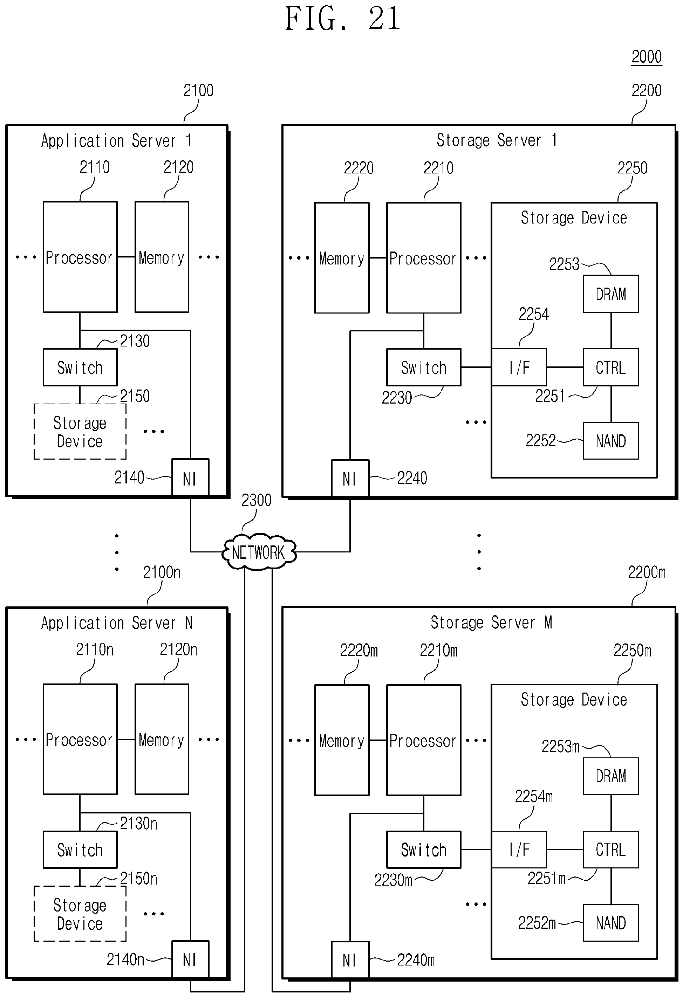

FIG. 21 is a diagram of a data center to which a memory device is applied, according to an embodiment.

Referring to FIG. 21, the data center 2000 may be a facility that collects various types of pieces of data and provides services and be referred to as a data storage center. The data center 2000 may be a system for operating a search engine and a database, and may be a computing system used by companies, such as banks, or government agencies. The data center 2000 may include application servers 2100 to 2100n and storage servers 2200 to 2200m. The number of application servers 2100 to 2100n and the number of storage servers 2200 to 2200m may be variously selected according to embodiments. The number of application servers 2100 to 2100n may be different from the number of storage servers 2200 to 2200m.

The application server 2100 or the storage server 2200 may include at least one of processors 2110 and 2210 and memories 2120 and 2220. The storage server 2200 will now be described as an example. The processor 2210 may control all operations of the storage server 2200, access the memory 2220, and execute instructions and/or data loaded in the memory 2220. The memory 2220 may be a double-data-rate synchronous DRAM (DDR SDRAM), a high-bandwidth memory (HBM), a hybrid memory cube (HMC), a dual in-line memory module (DIMM), Optane DIMM, and/or a non-volatile DIMM (NVMDIMM). In some embodiments, the numbers of processors 2210 and memories 2220 included in the storage server 2200 may be variously selected. In an embodiment, the processor 2210 and the memory 2220 may provide a processor-memory pair. In an embodiment, the number of processors 2210 may be different from the number of memories 2220. The processor 2210 may include a single-core processor or a multi-core processor. The above description of the storage server 2200 may be similarly applied to the application server 2100. In some embodiments, the application server 2100 may not include a storage device 2150. The storage server 2200 may include at least one storage device 2250. The number of storage devices 2250 included in the storage server 2200 may be variously selected according to embodiments.

The application servers 2100 to 2100n may communicate with the storage servers 2200 to 2200m through a network 2300. The network 2300 may be implemented by using a fiber channel (FC) or Ethernet. In this case, the FC may be a medium used for relatively high-speed data transmission and use an optical switch with high performance and high availability. The storage servers 2200 to 2200m may be provided as file storages, block storages, or object storages according to an access method of the network 2300.

In an embodiment, the network 2300 may be a storage-dedicated network, such as a storage area network (SAN). For example, the SAN may be an FC-SAN, which uses an FC network and is implemented according to an FC protocol (FCP). As another example, the SAN may be an Internet protocol (IP)-SAN, which uses a transmission control protocol TCP/IP network and is implemented according to a SCSI over TCP/IP or Internet SCSI (iSCSI) protocol. In another embodiment, the network 2300 may be a general network, such as a TCP/IP network. For example, the network 2300 may be implemented according to a protocol, such as FC over Ethernet (FCoE), network attached storage (NAS), and NVMe over Fabrics (NVMe-oF).

Hereinafter, the application server 2100 and the storage server 2200 will mainly be described. A description of the application server 2100 may be applied to another application server 2100n, and a description of the storage server 2200 may be applied to another storage server 2200m.

The application server 2100 may store data, which is requested by a user or a client to be stored, in one of the storage servers 2200 to 2200m through the network 2300. Also, the application server 2100 may obtain data, which is requested by the user or the client to be read, from one of the storage servers 2200 to 2200m through the network 2300. For example, the application server 2100 may be implemented as a web server or a database management system (DBMS).

The application server 2100 may access a memory 2120n or a storage device 2150n, which is included in another application server 2100n, through the network 2300. Alternatively, the application server 2100 may access memories 2220 to 2220m or storage devices 2250 to 2250m, which are included in the storage servers 2200 to 2200m, through the network 2300. Thus, the application server 2100 may perform various operations on data stored in application servers 2100 to 2100n and/or the storage servers 2200 to 2200m. For example, the application server 2100 may execute an instruction for moving or copying data between the application servers 2100 to 2100n and/or the storage servers 2200 to 2200m. In this case, the data may be moved from the storage devices 2250 to 2250m of the storage servers 2200 to 2200m to the memories 2120 to 2120n of the application servers 2100 to 2100n directly or through the memories 2220 to 2220m of the storage servers 2200 to 2200m. The data moved through the network 2300 may be data encrypted for security or privacy.

The storage server 2200 will now be described as an example. An interface 2254 may provide physical connection between a processor 2210 and a controller 2251 and a physical connection between a network interface (NI) 2240 and the controller 2251. For example, the interface 2254 may be implemented using a direct attached storage (DAS) scheme in which the storage device 2250 is directly connected with a dedicated cable. For example, the interface 2254 may be implemented by using various interface schemes, such as ATA, SATA, e-SATA, an SCSI, SAS, PCI, PCIe, NVMe, IEEE 1394, a USB interface, an SD card interface, an MMC interface, an eMMC interface, a UFS interface, an eUFS interface, and/or a CF card interface.

The storage server 2200 may further include a switch 2230 and the NI 2240. The switch 2230 may selectively connect the processor 2210 to the storage device 2250 or selectively connect the NI 2240 to the storage device 2250 via the control of the processor 2210.

In an embodiment, the NI 2240 may include a network interface card and a network adaptor. The NI 2240 may be connected to the network 2300 by a wired interface, a wireless interface, a Bluetooth interface, or an optical interface. The NI 2240 may include an internal memory, a digital signal processor (DSP), and a host bus interface and be connected to the processor 2210 and/or the switch 2230 through the host bus interface. The host bus interface may be implemented as one of the above-described examples of the interface 2254. In an embodiment, the NI 2240 may be integrated with at least one of the processor 2210, the switch 2230, and the storage device 2250.

In the storage servers 2200 to 2200m or the application servers 2100 to 2100n, a processor may transmit a command to storage devices 2150 to 2150n and 2250 to 2250m or the memories 2120 to 2120n and 2220 to 2220m and program or read data. In this case, the data may be data of which an error is corrected by an ECC engine. The data may be data on which a data bus inversion (DBI) operation or a data masking (DM) operation is performed, and may include cyclic redundancy code (CRC) information. The data may be data encrypted for security or privacy.

Storage devices 2150 to 2150n and 2250 to 2250m may transmit a control signal and a command/address signal to NAND flash memory devices 2252 to 2252m in response to a read command received from the processor. Thus, when data is read from the NAND flash memory devices 2252 to 2252m, a read enable (RE) signal may be input as a data output control signal, and thus, the data may be output to a DQ bus. A data strobe signal DQS may be generated using the RE signal. The command and the address signal may be latched in a page buffer depending on a rising edge or falling edge of a write enable (WE) signal.

The controller 2251 may control all operations of the storage device 2250. In an embodiment, the controller 2251 may include SRAM. The controller 2251 may write data to the NAND flash memory device 2252 in response to a write command or read data from the NAND flash memory device 2252 in response to a read command. For example, the write command and/or the read command may be provided from the processor 2210 of the storage server 2200, the processor 2210m of another storage server 2200m, or the processors 2110 and 2110n of the application servers 2100 and 2100n. DRAM 2253 may temporarily store (or buffer) data to be written to the NAND flash memory device 2252 or data read from the NAND flash memory device 2252. Also, the DRAM 2253 may store metadata. Here, the metadata may be user data or data generated by the controller 2251 to manage the NAND flash memory device 2252. The storage device 2250 may include a secure element (SE) for security or privacy.

In an embodiment, the network 2300 may be replaced with the CXL switch described with reference to FIGS. 1 to 20. In this case, the application servers 2100 to 2100n and the storage servers 2200 to 2200m may operate based on the operation method described with reference to FIGS. 1 to 20. Alternatively, the application servers 2100 to 2100n and the storage servers 2200 to 2200m may constitute the storage system (i.e., a distributed storage system) described with reference to FIGS. 1 to 20 and may operate based on the operation method described with reference to FIGS. 1 to 20.

According to the present invention, in a disaggregated storage system, a storage device may detect whether metadata of a host is changed and may transmit update information corresponding to the change of the metadata to any other hosts. Each of the other hosts may update metadata thereof based on the update information received from the storage device. Accordingly, the plurality of hosts may maintain the coherence of metadata about storage devices shared by the plurality of hosts without individual communication.

Embodiments are set out in the following clauses:
Clause 1. An operation method of a storage device which is connected to a compute express link (CXL) switch, the method comprising: receiving a first access request from a first host through the CXL switch; performing an operation corresponding to the first access request; detecting a change in first metadata managed by the first host, based on the first access request; and transmitting first update information corresponding to the change in the first metadata to a second host sharing the storage device through the CXL switch.
Clause 2. The method of clause 1, wherein the first access request includes a first address corresponding to a storage area of the storage device, and wherein the first update information includes the first address.
Clause 3. The method of clause 2, wherein the first access request is a PCI-e-based non-coherent input/output protocol, and wherein the first address is a logical block address managed by a file system of the first host.
Clause 4. The method of clause 2, wherein the first access request is based on a CXL.mem protocol, and wherein the first address is a memory physical address indicating an area of a system memory managed by the first host.
Clause 5. The method of any preceding clause, wherein the first host manages a storage area of the storage device, based on the first metadata, and wherein the second host manages the storage area of the storage device, based on second metadata.
Clause 6. The method of clause 5, wherein the second host updates the second metadata, based on the first update information.
Clause 7. The method of any preceding clause, further comprising: transmitting the first update information to a third host sharing the storage device through the CXL switch.
Clause 8. The method of any preceding clause, further comprising: receiving a second access request from the second host through the CXL switch; performing an operation corresponding to the second access request; detecting a change in second metadata managed by the second host, based on the second access request; and
transmitting second update information corresponding to the change in the second metadata to the first host sharing the storage device through the CXL switch.
Clause 9. The method of any preceding clause, wherein the performing of the operation corresponding to the first access request includes: transmitting first data stored in the storage device to an external storage device through the CXL switch in response to the first access request.
Clause 10. A storage device comprising: a nonvolatile memory device; a random access memory (DRAM) device; and a controller configured to control the nonvolatile memory device and the DRAM device in response to a first access request received from a first host among a plurality of hosts, wherein the controller includes: compute express link (CXL) interface circuit connected to a CXL switch and configured to receive the first access request from the first host through the CXL switch; a NAND interface circuit configured to control the nonvolatile memory device, based on the first access request; a DRAM controller configured to control the DRAM device, based on the first access request; and a coherence circuit configured to detect a change in first metadata managed by the first host in response to the first access request and to transmit first update information corresponding to the change in the first metadata to other hosts sharing the storage device from among the plurality of hosts through the CXL switch.
Clause 11. The storage device of clause 10, wherein the coherence circuit includes a share table, and wherein the share table includes a port identifier and a callback parameter of each of the other hosts sharing the storage device.
Clause 12. The storage device of clause 11, wherein the coherence circuit transmits the first update information to each of the other hosts, based on the port identifier and the callback parameter of the share table.
Clause 13. The storage device of any one of clauses 10 to 12, wherein the first access request includes a first address corresponding to a storage area of the storage device, and wherein the first update information includes the first address.
Clause 14. The storage device of clause 13, wherein the first access request is a PCI-e-based non-coherent input/output protocol, and wherein the first address is a logical block address managed by a file system of the first host.
Clause 15. The storage device of clause 13, wherein the first access request is based on a CXL.mem protocol, and wherein the first address is a memory physical address indicating an area of a system memory managed by the first host.
Clause 16. An operation method comprising providing a storage system comprising: a compute express link (CXL) switch; a first storage device connected to the CXL switch; a first host connected to the CXL switch; and a second host connected to the CXL switch, the method comprising; transmitting, by the first host, a first access request corresponding to a storage area of the first storage device to the first storage device through the CXL switch and updating first metadata; receiving, by the first storage device, the first access request through the CXL switch and performing an operation corresponding to the first access request; detecting, by the first storage device, a change in the first metadata and transmitting first update information corresponding to the change in the first metadata to the second host through the CXL switch; and receiving, by the second host, the first update information through the CXL switch and updating second metadata based on the first update information, wherein the first and second hosts share the first storage device, wherein the first host manages a first storage area of the first storage device based on the first metadata, and wherein the second host manages the first storage area of the first storage device, based on the second metadata.
Clause 17. The method of clause 16, wherein the first access request is based on a PCI-e-based non-coherent input/output protocol or a CXL.mem protocol.
Clause 18. The method of clause 16 or 17, wherein the storage system further includes a second storage device connected to the CXL switch, and wherein the performing of the operation corresponding to the first access request by the first storage device includes transmitting first data stored in the first storage device to the second storage device through the CXL switch.
Clause 19. The method of clause 18 further comprises: storing, by the second storage device, the first data received from the first storage device in a second storage area of the second storage device; detecting, by the second storage device, the change in the first metadata and transmitting second update information corresponding to the change in the first metadata to the second host through the CXL switch; and updating, by the second host, the second metadata based on the second update information, wherein the first and second hosts share the second storage device, wherein the first host further manages the second storage area of the second storage device, based on the first metadata, and wherein the second host further manages the second storage area of the second storage device, based on the second metadata.
Clause 20. The method of any one of clauses 16 to 19, wherein the storage system is a disaggregated storage system.
   21. A coherence device comprising: a connector configured to be removably attached to a compute express link (CXL) switch of a storage system; an interface circuit configured to communicate with the CXL switch through the connector; and a coherence circuit, and wherein the coherence circuit is configured: to detect a change in first metadata in response to a first memory access request from a first host through the CXL switch; and to transmit first update information corresponding to the change in the first metadata to a second host, the first and second host sharing a plurality of storage devices through the CXL switch.

While the present invention has been described with reference to embodiments thereof, it will be apparent to those of ordinary skill in the art that various changes and modifications may be made thereto without departing from the scope of the present invention as set forth in the following claims.

## Claims

1. An operation method of a storage device which is connected to a compute express link (CXL) switch, the method comprising:
receiving a first access request from a first host through the CXL switch;
performing an operation corresponding to the first access request;
detecting a change in first metadata managed by the first host, based on the first access request; and
transmitting first update information corresponding to the change in the first metadata to a second host sharing the storage device through the CXL switch.

2. The method of claim 1,
wherein the first access request includes a first address corresponding to a storage area of the storage device, and
wherein the first update information includes the first address.

3. The method of claim 2,
wherein the first access request is based on a CXL.io protocol being a PCI-e-based non-coherent input/output protocol, and
wherein the first address is a logical block address managed by a file system of the first host.

4. The method of claim 2,
wherein the first access request is based on a CXL.mem protocol being a memory access protocol supporting a memory access, and
wherein the first address is a memory physical address indicating an area of a system memory managed by the first host.

5. The method of any preceding claim,
wherein the first host manages a storage area of the storage device, based on the first metadata, and
wherein the second host manages the storage area of the storage device, based on second metadata.

6. The method of claim 5, wherein the second host updates the second metadata, based on the first update information.

7. The method of any preceding claim, further comprising:
transmitting the first update information to a third host sharing the storage device through the CXL switch.

8. The method of any preceding claim, further comprising:
receiving a second access request from the second host through the CXL switch;
performing an operation corresponding to the second access request;
detecting a change in second metadata managed by the second host, based on the second access request; and
transmitting second update information corresponding to the change in the second metadata to the first host sharing the storage device through the CXL switch.

9. The method of any preceding claim, wherein the performing of the operation corresponding to the first access request includes:
transmitting first data stored in the storage device to an external storage device through the CXL switch in response to the first access request.

10. A storage device comprising:
a nonvolatile memory device;
a random access memory (DRAM) device; and
a controller configured to control the nonvolatile memory device and the DRAM device in response to a first access request received from a first host among a plurality of hosts,
wherein the controller includes:
a compute express link (CXL) interface circuit connected to a CXL switch and configured to receive the first access request from the first host through the CXL switch;
a NAND interface circuit configured to control the nonvolatile memory device, based on the first access request;
a DRAM controller configured to control the DRAM device, based on the first access request; and
a coherence circuit configured to detect a change in first metadata managed by the first host in response to the first access request and to transmit first update information corresponding to the change in the first metadata to other hosts sharing the storage device from among the plurality of hosts through the CXL switch.

11. The storage device of claim 10,
wherein the coherence circuit includes a share table, and
wherein the share table includes a port identifier and a callback parameter of each of the other hosts sharing the storage device.

12. The storage device of claim 11, wherein the coherence circuit is configured to transmit the first update information to each of the other hosts, based on the port identifier and the callback parameter of the share table.

13. The storage device of any one of claims 10 to 12,
wherein the first access request includes a first address corresponding to a storage area of the storage device, and
wherein the first update information includes the first address.

14. The storage device of claim 13,
wherein the first access request is based on a CXL.io being a PCI-e-based non-coherent input/output protocol, and
wherein the first address is a logical block address managed by a file system of the first host.

15. The storage device of claim 13,
wherein the first access request is based on a CXL.mem protocol being a memory access protocol supporting a memory access, and
wherein the first address is a memory physical address indicating an area of a system memory managed by the first host.
